# EUROPEAN PATENT SPECIFICATION

(11) **EP 1 722 362 B1**
(45) Date of publication and mention of the grant of the patent: **16.09.2009**
(21) Application number: 06009548.6
(22) Date of filing: 09.05.2006
(51) Int. Cl.: G11B 5/73, G11B 5/738

(54) **Magnetic recording medium**
Magnetisches Aufzeichnungsmedium
Support d'enregistrement magnétique

(30) Priority: 11.05.2005 JP 2005138665
(43) Date of publication of application: 15.11.2006
(73) Proprietor: FUJIFILM Corporation, Minato-ku Tokyo (JP)
(72) Inventor: Meguro, Katsuhiko, Odawara-shi, Kanagawa (JP); Takahashi, Masatoshi, Odawara-shi, Kanagawa (JP)
(74) Representative: HOFFMANN EITLE

(56) References cited:
- EP-A- 0 712 118
- EP-A- 1 424 689
- DE-C1- 3 422 910
- JP-A- 10 217 410
- JP-A- 10 217 411
- JP-A- 2002 237 027
- US-A- 4 568 598

## Description

The present invention relates to a magnetic recording medium comprising, in order above at least one surface of a non-magnetic support, a reinforcing layer, a smoothing layer, and a magnetic layer and, in particular, to a magnetic recording medium having both excellent electromagnetic conversion characteristics and excellent transport durability.

In the field of magnetic tapes, accompanying the recent spread of personal computers, work stations, etc., intensive research has been carried out into a magnetic recording medium as an external memory medium for recording computer data. When the magnetic recording medium is put into practice for such an application, there has been in particular a strong requirement for an increase in the recording capacity in order to satisfy demand for increased capacity and a reduction in dimensions of a recording system accompanying the reduction in dimensions and increase in information processing capacity of computers.

Recently, a playback head employing MR (magnetoresistance) as the operating principle has been proposed, its use in hard disks, etc. has started, and in JP-A-8-227517 (JP-A denotes a Japanese unexamined patent application publication) its application to magnetic tape is proposed. The MR head gives a playback output several times that of an induction type magnetic head, and since it does not use an induction coil, equipment noise such as impedance noise is greatly reduced, and by reducing the noise of the magnetic recording medium it becomes possible to obtain a large S/N ratio. In other words, by reducing the magnetic recording medium noise, which had been hidden by equipment noise, recording and playback can be carried out well, and the high density recording characteristics are outstandingly improved.

As a conventional magnetic recording medium, one formed by providing above a non-magnetic support a magnetic layer comprising iron oxide, Co-modified iron oxide, CrO₂, or a ferromagnetic hexagonal ferrite powder dispersed in a binder is widely used. As the magnetic powder, a ferromagnetic metal powder and a ferromagnetic hexagonal ferrite powder are known to have excellent high density recording characteristics. In order to reduce the magnetic recording medium noise, it is effective to reduce the particle size of the ferromagnetic powder, and in recent years an effect has been produced by using as a magnetic substance a ferromagnetic hexagonal ferrite powder having a plate size of 40 nm or less or a ferromagnetic metal powder having an average major axis length of 100 nm or less.

In order to achieve a higher recording density and a larger recording capacity, there is a trend to reduce the track width when recording/playing back the magnetic recording medium. Furthermore, in the field of magnetic tape, in order to achieve high density recording, the magnetic tape is made thinner, and there are a large number of magnetic tapes having a total thickness of 10 µm or less. However, the smaller the thickness of the magnetic layer of the magnetic recording medium, the more it is subject to the influence of the temperature and humidity and change of tension during storage and transport, etc.

That is, when recording and playback are carried out in a magnetic recording/playback system employing a linear recording system, a magnetic head moves in the width direction of the magnetic tape so as to select a track, and as the track width decreases a higher precision is required for controlling the relative position between the magnetic tape and the head. Even if a narrow track can be achieved by improving the S/N ratio by use of the above-mentioned MR head and fine particulate magnetic substance, since there are cases in which due to temperature and humidity of the application environment and variation of tension in a drive the magnetic recording medium might deform so that the playback head cannot read a recorded track, a medium with yet higher dimensional stability is necessary. For such a high density magnetic recording medium, in order to maintain stable recording and playback, higher dimensional stability and higher mechanical strength are required compared with conventional media.

In addition, when reduction in thickness of a magnetic recording medium progresses for the purpose of increasing a recording density, reduction in thickness of applied layers such as a magnetic layer is also carried out. In this case, a non-magnetic support can not enjoy a sufficient leveling effect and surface conditions of the non-magnetic support gives a large effect on the surface of the magnetic layer. Particularly, in a linear recording method, a magnetic tape transports approximately parallel to the head and contacts the magnetic head, dropout tends to generate due to a projection on the surface of the magnetic layer. In order to prevent the above-mentioned dropout caused by a projection on the magnetic layer, change of the type and addition amount of a filler contained in a non-magnetic support has been carried out. However, since it creates such problems in handling that the support tends to adhere easily in processes of film-forming of the support and application of a medium, development of a magnetic recording medium, which can effectively prevent dropout at magnetic recording without being affected by a projection on the surface of a non-magnetic support, is requested.

For example, a magnetic recording medium is proposed (JP-A-2000-11364), which uses a support having a reinforcing film comprising a metal substance selected from metals, metalloids and alloys, and oxides and composites of these formed on both sides of a polyester-based plastic film, for the purpose of improving the stiffness of a polyester-based film up to a degree equal to or more than that of an aramid film.

It is known, in general, to dispose a reinforcing film comprising a metal, metalloid or metal oxide by a vacuum evaporation, sputtering method, ion plating method or the like in order to improve strength and dimensional stability against heat of a thermoplastic polymer film. However, there is such problem that the treatment alone can not result in sufficient dimensional stability when the film is applied to a recent backup tape for computer.

For the purpose of improving dimensional stability against heat of polyethylene-2,6-naphthalenedicarboxylate (PEN) film, a PEN film is proposed (JP-A-8-244110) in which a degree of crystallinity has been enhanced up to 40% or more by irradiating infrared rays to the film after film-forming.

However, according to Examples of JP-A-8-244110, a degree of crystallinity by infrared ray irradiation is at most 43% and there is such problem that the film can not give sufficient dimensional stability when it is applied to a recent backup tape for computer.

It is an object of the present invention to provide an excellent magnetic recording medium that can maintain a high S/N ratio achieving an excellent surface recording density, and that has a few dropout and low error rate.

In order to accomplish this object, the present inventors have intensively investigated physical properties of a non-magnetic support, a reinforcing layer and a smoothing layer disposed on the reinforcing layer in a magnetic recording medium comprising at least a non-magnetic layer and a magnetic layer in this order above a non-magnetic support, for the purpose of improving dimensional stability of the non-magnetic support, and as a result, the magnetic recording medium of the present invention having a low error rate and an excellent reliability has been accomplished.

The above-mentioned problems can be solved by the following means <1>. It is described below together with <2> to <6>, which are preferable embodiments.
<1> A magnetic recording medium comprising, in order; a non-magnetic support having a degree of crystallinity of from 40% to 60% and a rigid amorphous content of from 20% to 60%, at least a reinforcing layer comprising Al₂O₃ a smoothing layer, non-magnetic layer comprising a non-magnetic powder and a binder, and a magnetic layer comprising a ferromagnetic powder and a binder.
<2> The magnetic recording medium described in <1>, wherein the thickness of the smoothing layer is from 0.3 µm to 3 µm.
<3> The magnetic recording medium described in <1 > or <2>,
   wherein the thickness of the reinforcing layer is from 20 nm to 500 nm.
<4> The magnetic recording medium described in any one of <1> to <3>,
   wherein the dry thickness of the non-magnetic layer is from 0.05 µm to 2.5 µm.
<5> The magnetic recording medium described in any one of <1> to <4>,
wherein the dry thickness of the magnetic layer is from 10 nm to 100 nm.

Further preferred embodiments are specified in appended Claims 6-8.

According to the present invention, a magnetic recording medium, which can stably give a low error rate due to a lowered noise and, consequently, an excellent S/N ratio, can be provided.

The magnetic recording medium of the present invention will be described in detail below in order of layer structures disposed above a non-magnetic support.

### I. Non-magnetic support

With regard to non-magnetic supports that can be used in the present invention, there are known supports such as biaxially stretched polyethylene naphthalate (PEN), polyethylene terephthalate (PET), polyamide, polyimide, polyamideimide, aromatic polyamide, and polybenzoxidazole. Preferred examples include polyethylene terephthalate and polyethylene naphthalate. These non-magnetic supports may be subjected beforehand to corona discharge, a plasma treatment, an adhesion promotion treatment, a thermal treatment, etc.

The degree of crystallinity of a non-magnetic support that can be used for the present invention is from 40 to 60%, and preferably from 40 to 55%, from the point of electromagnetic conversion characteristic and dimensional stability. A rigid amorphous content defined as a remaining content that is derived by subtracting a degree of crystallinity (%) and an amorphous percentage (%) from the whole, that is, 100 %, is from 20 to 60%, and preferably from 25 to 50% from the point of electromagnetic conversion characteristic and dimensional stability.

The degree of crystallinity, rigid amorphous content and amorphous percentage of a non-magnetic support for use in the magnetic recording medium of the present invention is determined for a non-magnetic support provided with a reinforcing layer by differential scanning calorimetric analysis. A detailed measuring method follows the method shown in Example.

A method for preparing the non-magnetic support of the present invention is not particularly limited, but it is preferable to adjust the mechanical strength both in the longitudinal direction and the width direction. Specifically, it is preferable to employ a method in which, when forming a resin into a film form (film-forming), the longitudinal direction and the width direction are stretched appropriately. The support used in the present invention preferably has a Young's modulus both in the longitudinal direction and the width direction of 4.4 to 15 GPa, and more preferably 5.5 to 11 GPa, and the Young's modulus in the longitudinal direction may be different from that in the width direction. In order to adjust the mechanical strength both in the longitudinal direction and the width direction, a film having been not stretched is subjected to biaxial stretching to be biaxially oriented. Stretching methods that can be used include a sequential biaxial stretching method and a simultaneous biaxial stretching method. A method is preferably exemplified in which a sequential biaxial stretching method is used to stretch a film first in the longitudinal direction and then in the width direction, wherein the stretching in the longitudinal direction is carried out in 3 or more steps under such conditions that falls within a range from 80 to 180°C for a stretching temperature, from 3.0 to 6.0 times for the total stretching magnification ratio, and from 5,000 to 50,000 %/min for a stretching speed. In order to stretch a film in width direction, a method using a tenter is preferable. The stretching in the width direction is preferably carried out under such conditions that falls within a range from the glass transition temperature (Tg) of the film to (Tg + 100°C) for a stretching temperature, from 3.2 to 7.0 times for a stretching magnification ratio, which is sometimes greater than that in the longitudinal direction, and from 1,000 to 20,000 %/min for a stretching speed. In addition, the longitudinal direction stretching and the width direction stretching may be repeated according to need. The stretching magnification ratio and stretching temperature as the stretching conditions give a large influence on molecular orientation conditions, and give an influence on the glass transition temperature and a rigid amorphous content as well as a degree of crystallinity described next, therefore it is necessary to select these conditions in order to obtain a biaxially oriented film for use in the present invention.

Subsequently, the biaxially oriented film is thermally treated. In the thermal treatment in this case, a range from (cold crystallization temperature (Tc) + 40°C) to (Tc + 100°C) for temperature, and a range from 0.5 to 60 seconds for time are preferable. The thermal treatment conditions, temperature conditions in a step of lowering to ordinary temperature after the thermal treatment etc. change the glass transition temperature and the rigid amorphous content, therefore these conditions must be suitably selected again in order to obtain a biaxially stretched film for use in the present invention. Here, when a process speed is large and transition to ordinary temperature is fast, the rigid amorphous content is decreased. Therefore, in order to increase the rigid amorphous content, lowering the process speed is effective.

Further, it is also possible to increase the degree of crystallinity and rigid amorphous content by carrying out thermal treatment, after the film-forming, so that the film temperature becomes at (Tc + 40°C) to (Tc + 100°C), for example, when a reinforcing layer described below is disposed, and controlling cooling rate in a similar way as in the film-forming step.

The non-magnetic support that can be used for the invention has a center plane average roughness (JIS B0660-1998, ISO 4287-1997) of preferably from 1.8 to 9 nm, and more preferably from 2 to 8 nm at a cut off value of 0.25 mm for the surface above which the magnetic layer is applied. Each of surfaces of the support may have a surface roughness that is different from each other. The non-magnetic support in the magnetic recording medium of the present invention has a thickness of preferably 3 to 60 µm.

### II. Reinforcing layer

A reinforcing layer provided on the surface of the film on which the magnetic layer is to be provided is formed from a metal material selected from an oxide thereof. The metal is Al The oxide of this metal can easily be obtained by, for example, introducing oxygen gas during vapor deposition.

The method for forming the reinforcing layer is not limited, but a vacuum vapor deposition method is generally employed, and it is also possible to employ a sputtering method or an ion plating method.

The thickness of the reinforcing layer is preferably 20 to 500 nm, and more preferably 40 to 300 nm. The reinforcing layer may comprise a single layer or multiple layers.

In the present invention, the reinforcing layer includes an oxide of a metal, and that the oxygen concentration distribution in the reinforcing layer is high in the vicinity of the surface of the reinforcing layer, and it is more preferable that the oxygen concentration distribution in the reinforcing layer is high in the vicinity of the surface of the reinforcing layer and in the vicinity of the interface between the reinforcing layer and the film in terms of film rigidity. The reinforcing layer having such an oxygen distribution can be prepared by subjecting the surface thereof to a forced oxidation treatment with an oxidizing gas during or after film formation. The oxygen concentration distribution in the reinforcing layer can be measured by analysis in the depth direction using Auger electron spectroscopy.

The "high oxygen concentration distribution" referred to here means that the oxygen concentration is high relative to other areas and, in particular, includes a case in which variation in the concentration is equal to or greater than 10 atom %.

### III. Smoothing layer

The magnetic recording medium of the present invention is provided with a smoothing layer between the reinforcing layer and the non-magnetic layer.

The smoothing layer in the magnetic recording medium of the present invention is preferably a layer cured by exposing a layer comprising a radiation-polymerizable compound (hereinafter, called a 'radiation curing compound') to radiation. The layer may include a binder, a polymerization initiator, etc. as necessary.

The smoothing layer in the magnetic recording medium of the present invention is more preferably a layer cured by exposing a layer consisting of a radiation-curing compound alone to radiation.

### Radiation curing compound

The radiation-polymerizable compound used in the present invention referred to here means a compound that has the property of polymerizing or crosslinking when it is given energy by radiation such as an electron beam or ultraviolet rays and becoming a high molecular weight compound. Since the compound does not react unless it is given energy, a coating solution containing a radiation-polymerizable compound has a stable viscosity unless it is irradiated with radiation, and a high coating smoothness can be obtained. Furthermore, since the reaction proceeds instantaneously by virtue of the high energy of the radiation, a high coating strength can be obtained. Examples of the radiation used in the present invention include various types of radiation such as an electron beam (β rays), ultraviolet rays, X rays, γ rays, and α rays.

The radiation curing compound used in the present invention preferably has a molecular weight in the range of 200 to 2,000. If the molecular weight is in this range, the coating solution flows easily, and a smooth coating can be realized.

Examples of the radiation curing compound include (meth)acrylic acid esters, (meth)acrylamides, (meth)acrylic acid amides, allyl compounds, vinyl ethers, and vinyl esters. The (meth)acrylic referred to here is a general expression meaning acrylic and methacrylic.

Specific examples of difunctional radiation curing compounds include ethylene glycol di(meth)acrylate, propylene glycol di(meth)acrylate, butanediol di(meth)acrylate, hexanediol di(meth)acrylate, diethylene glycol di(meth)acrylate, triethylene glycol di(meth)acrylate, tetraethylene glycol di(meth)acrylate, neopentyl glycol di(meth)acrylate, tripropylene glycol di(meth)acrylate, polyether (meth)acrylate, polyester (meth)acrylate, polyurethane (meth)acrylate, bisphenol A, bisphenol F, hydrogenated bisphenol A, hydrogenated bisphenol F, (meth)acrylic acid addition products of alkylene oxide adducts of the above compounds, an isocyanuric acid alkylene oxide-modified di(meth)acrylate, and one having a cyclic structure such as tricyclodecanedimethanol di(meth)acrylate.

Specific examples of trifunctional radiation curing compounds include trimethylol propane tri(meth)acrylate, trimethylol ethane tri(meth)acrylate, trimethylol propane alkylene oxide-modified tri(meth)acrylate, pentaerythritol tri(meth)acrylate, dipentaerythritol tri(meth)acrylate, isocyanuric acid alkylene oxide-modified tri(meth)acrylate, propionic acid dipentaerythritol tri(meth)acrylate, and hydroxypivalaldehyde-modified dimethylol propane tri(meth)acrylate.

Specific examples of tetra- or higher functional radiation curing compounds include pentaerythritol tetra(meth)acrylate, ditrimethylol propane tetra(meth)acrylate, dipentaerythritol penta(meth)acrylate, propionic acid dipentaerythritol tetra(meth)acrylate, dipentaerythritol hexa(meth)acrylate, and phosphazene alkylene oxide-modified hexa(meth)acrylate.

Among these, preferred specific examples include difunctional (meth)acrylate compounds having a molecular weight of 200 to 2,000, and more preferred examples include alicyclic compounds such as dimethylol tricyclodecane, hydrogenated bisphenol A, hydrogenated bisphenol F, and 5-ethyl-2-(2-hydroxy-1,1-dimethylethyl)-5-(hydroxymethyl)-1,3-dioxane, bisphenol A, bisphenol F, and (meth)acrylic acid addition products of alkylene oxide adducts of the above compounds.

When ultraviolet rays are used as the radiation, it is preferable to use a polymerization initiator in combination. As the polymerization initiator, a radical photopolymerization initiator, a cationic photopolymerization initiator, or an amine photogenerating agent, etc. can be used.

Examples of the radical photopolymerization agent include α-diketones such as benzyl and diacetyl, acyloins such as benzoin, acyloin ethers such as benzoin methyl ether, benzoin ethyl ether, and benzoin isopropyl ether, thioxanthones such as thioxanthone, 2,4-diethylthioxanthone, and thioxanthone-4-sulfonic acid, benzophenones such as benzophenone, 4,4'-bis(dimethylamino)benzophenone, and 4,4'-bis(diethylamino)benzophenone, Michler's ketone, acetophenones such as acetophenone, 2-(4-toluenesulfonyloxy)-2-phenylacetophenone, *p-*dimethylaminoacetophenone, α,α'-dimethoxyacetoxybenzophenone, 2,2'-dimethoxy-2-phenylacetophenone, *p*-methoxyacetophenone, 2-methyl[4-(methylthio)phenyl]-2-morpholino-1-propanone, and 2-benzyl-2-dimethylamino-1-(4-morpholinophenyl)-butan-1-one, quinones such as anthraquinone and 1,4-naphthoquinone, halogen compounds such as phenacyl chloride, trihalomethylphenylsulfones, and tris(trihalomethyl)-*s*-triazines, acylphosphine oxides, and peroxides such as di-t-butyl peroxide. It is also possible to use as the radical photopolymerization agent a commercial product such as IRGACURE-184, IRGACURE-261, IRGACURE-369, IRGACURE-500, IRGACURE-651, or IRGACURE-907 (manufactured by Ciba-Geigy Ltd.), Darocur-1173, Darocur-1116, Darocur-2959, Darocur-1664, or Darocur-4043 (manufactured by Merck Japan), KAYACURE-DETX, KAYACURE-MBP, KAYACURE-DMBI, KAYACURE-EPA, or KAYACURE-OA (manufactured by Nippon Kayaku Co., Ltd.), VICURE-10, or VICURE-55 (manufactured by STAUFFER Co., Ltd.), TRIGONALP1 (manufactured by AKZO Co., Ltd.), SANDORAY 1000 (manufactured by SANDOZ Co., Ltd.), DEAP (manufactured by UPJOHN Co., Ltd.), or QUANTACURE-PDO, QUANTACURE-ITX, or QUANTACURE-EPD (manufactured by WARD BLENKINSOP Co., Ltd.).

Examples of the cationic photopolymerization initiator include diazonium salts, triphenylsulfonium salts, metallocene compounds, diaryliodonium salts, nitrobenzylsulfonates, α-sulfonyloxy ketones, diphenyldisulfones, and imidylsulfonates. As the cationic photopolymerization initiator, commercial products such as Adeka Ultraset PP-33, OPTMER SP-150, or OPTMER-170 (manufactured by Asahi Denka Co. Ltd.) (diazonium salt), or IRGACURE 261 (manufactured by Ciba-Geigy Ltd.) (metallocene compound) can also be used.

Examples of the amine photogenerating agent include nitrobenzicarbamimates and iminosulfonates. These photopolymerization initiators are selected appropriately according to the exposure conditions (e.g., whether there is an oxygen atmosphere, an oxygen-free atmosphere), etc. These photopolymerization initiators may be used in a combination of two or more types.

A composition comprising the binder and/or radiation curing compound used in the smoothing layer of the present invention, yet another binder, a photopolymerization initiator, etc. is made into a coating solution using a solvent that can dissolve the composition. The solvent is not particularly limited, and a conventionally known organic solvent may be used. Drying may be carried out naturally or by heating. In the case of the radiation curing compound, after a support is coated with the coating solution and dried, the coated layer is irradiated with radiation.

When an electron beam is employed as the radiation, with regard to electron beam accelerators, a Van de Graaff scanning system, a double scanning system, and a curtain beam system can be employed, and the curtain beam system is preferable since it is relatively inexpensive and gives a high output. With regard to electron beam characteristics, the acceleration voltage is preferably 10 to 1,000 kV, and more preferably 50 to 300 kV. It is preferable if the acceleration voltage is no less than 10 kV since the amount of energy penetrating is then sufficient, and it is preferable if it is no greater than 1,000 kV since the energy efficiency for polymerization is then excellent and economical. The absorbed dose is preferably 0.5 to 20 Mrad, and more preferably 1 to 10 Mrad. It is preferable if the absorbed dose is no less than 0.5 Mrad since the curing reaction then proceeds adequately and a sufficient strength can be obtained, and it is preferable if it is no greater than 20 Mrad since the energy efficiency for curing is then excellent, the material being irradiated is not heated and, in particular, a plastic support does not deform.

When ultraviolet rays are employed, the dose is preferably 10 to 100 mJ/cm². It is preferable if it is no less than 10 mJ/cm² since the curing reaction then proceeds adequately and a sufficient strength can be obtained, and it is preferable if it is no greater than 100 mJ/cm² since the energy efficiency for curing is then excellent, the material being irradiated is not heated and, in particular, a plastic support does not deform. With regard to the ultraviolet (UV) rays and electron beam (EB) radiation equipment, conditions, etc., known equipment and conditions described in 'UV EB Kokagijutsu' (UV/EB Radiation Curing Technology) (1982, published by the Sogo Gijutsu Center), 'Teienerugi Denshisenshosha no Oyogijutsu' (Application of Low-energy Electron Beam) (1999, Published by CMC), etc. can be employed.

### Binder

Examples of the binder used in the smoothing layer of the present invention include a conventionally known organic solvent-soluble thermoplastic resin, thermosetting resin, reactive resin, or a mixture thereof. Specific examples thereof include a polyamide resin, a polyamideimide resin, a polyester resin, a polyurethane resin, a vinyl chloride resin, and an acrylic resin. When the non-magnetic layer and/or the magnetic layer are applied after forming the smoothing layer, the smoothing layer might swell or dissolve in a solvent contained in the non-magnetic layer and the magnetic layer and the surface properties thereof might be degraded, and in such a case a binder that does not dissolve in the solvent contained in the non-magnetic layer and the magnetic layer but can be dissolved in another organic solvent is preferably used. The glass transition temperature of the binder used in the smoothing layer of the present invention is preferably 0°C to 120°C, and more preferably 10°C to 80°C. If it is no less than 0°C, blocking at an end face does not occur, and if it is no greater than 120°C, internal stress within the smoothing layer can be relaxed, and the adhesion is excellent. With regard to the molecular weight, those having a weight-average molecular weight in the range of 1,000 to 100,000 can be used, but those having a weight-average molecular weight in the range of 5,000 to 50,000 are particularly preferable. If the weight-average molecular weight is no less than 1,000, blocking at an end face does not occur, and if it is no greater than 100,000, solubility in an organic solvent is good, and it is possible to apply the smoothing layer by coating, which is preferable.

The smoothing layer of the present invention preferably has a thickness of 0.3 to 3.0 µm, more preferably 0.35 to 2.0 µm, and yet more preferably 0.4 to 1.5 µm. Although the thickness of the smoothing layer depends on the components, etc. of the smoothing layer, the thinner the smoothing layer, the more preferable it is for higher capacity, as long as the surface properties and physical strength of the smoothing layer can be guaranteed.

### IV. Non-magnetic layer

The magnetic recording medium of the present invention comprises a non-magnetic layer, the non-magnetic layer comprising a non-magnetic powder dispersed in a binder. The non-magnetic layer is disposed on the reinforcing layer directly or, if desired, via the smoothing layer or an adhesion promotion layer.

### Non-magnetic powder

The non-magnetic powder that can be used in the non-magnetic layer may be an inorganic substance or an organic substance. The non-magnetic layer may include carbon black, etc. Examples of the inorganic substance include a metal, a metal oxide, a metal carbonate, a metal sulfate, a metal nitride, a metal carbide, and a metal sulfide.

Specific examples thereof include a titanium oxide such as titanium dioxide, cerium oxide, tin oxide, tungsten oxide, ZnO, ZrO₂, SiO₂, Cr₂O₃, α-alumina having an α-component proportion of 90% to 100%, β-alumina, γ-alumina, α-iron oxide, goethite, corundum, silicon nitride, titanium carbide, magnesium oxide, boron nitride, molybdenum disulfide, copper oxide, MgCO₃, CaCO₃, BaCO₃, SrCO₃, BaSO₄, silicon carbide, and titanium carbide, and they can be used singly or in a combination of two or more types. α-Iron oxide or a titanium oxide is preferable.

The form of the non-magnetic powder may be any one of acicular, spherical, polyhedral, and tabular. The crystallite size of the non-magnetic powder is preferably 4 nm to 1 µm, and more preferably 40 to 100 nm. When the crystallite size is in the range of 4 nm to 1 µm, there are no problems with dispersion and a suitable surface roughness is obtained. The average particle size of these non-magnetic powders is preferably 5 nm to 2 µm, but it is possible to combine non-magnetic powders having different average particle sizes as necessary, or widen the particle size distribution of a single non-magnetic powder, thus producing the same effect. The average particle size of the non-magnetic powder is particularly preferably 10 to 200 nm. It is preferable if it is in the range of 5 nm to 2 µm, since good dispersibility and a suitable surface roughness can be obtained.

The specific surface area of the non-magnetic powder is preferably 1 to 100 m²/g, more preferably 5 to 70 m²/g, and yet more preferably 10 to 65 m²/g. It is preferable if the specific surface area is in the range of 1 to 100 m²/g, since a suitable surface roughness can be obtained, and dispersion can be carried out using a desired amount of binder. The DBP oil absorption is preferably 5 to 100 mL/100 g, more preferably 10 to 80 mL/100 g, and yet more preferably 20 to 60 mL/100 g. The specific gravity is preferably 1 to 12, and more preferably 3 to 6. The tap density is preferably 0.05 to 2 g/mL, and more preferably 0.2 to 1.5 g/mL. When the tap density is in the range of 0.05 to 2 g/mL, there is little scattering of particles, the operation is easy, and there tends to be little sticking to equipment. The pH of the non-magnetic powder is preferably 2 to 11, and particularly preferably 6 to 9. When the pH is in the range of 2 to 11, the coefficient of friction does not increase as a result of high temperature and high humidity or release of a fatty acid. The water content of the non-magnetic powder is preferably 0.1 to 5 wt %, more preferably 0.2 to 3 wt %, and yet more preferably 0.3 to 1.5 wt %. It is preferable if the water content is in the range of 0.1 to 5 wt %, since dispersion is good, and the viscosity of a dispersed coating solution becomes stable. The ignition loss is preferably 20 wt % or less, and a small ignition loss is preferable.

When the non-magnetic powder is an inorganic powder, the Mohs hardness thereof is preferably in the range of 4 to 10. When the Mohs hardness is in the range of 4 to 10, it is possible to guarantee the durability. The amount of stearic acid absorbed by the non-magnetic powder is preferably 1 to 20 µmol/m², and more preferably 2 to 15 µmol/m². The heat of wetting of the non-magnetic powder in water at 25°C is preferably in the range of 200 to 600 erg/cm². It is possible to use a solvent that gives a heat of wetting in this range. The number of water molecules on the surface at 100°C to 400°C is suitably 1 to 10/100A. The pH at the isoelectric point in water is preferably between 3 and 9. The surface of the non-magnetic powder is preferably subjected to a surface treatment with Al₂O₃, SiO₂, TiO₂, ZrO₂, SnO₂, Sb₂O₃, or ZnO. In terms of dispersibility in particular, Al₂O₃, SiO₂, TiO₂, and ZrO₂ are preferable, and Al₂O₃, SiO₂, and ZrO₂ are more preferable. They may be used in combination or singly. Depending on the intended purpose, a surface-treated layer may be obtained by co-precipitation, or a method can be employed in which the surface is firstly treated with alumina and the surface thereof is then treated with silica, or vice versa. The surface-treated layer may be formed as a porous layer depending on the intended purpose, but it is generally preferable for it to be uniform and dense.

Specific examples of the non-magnetic powder used in the non-magnetic layer of the present invention include Nanotite (manufactured by Showa Denko K.K.), HIT-100 and ZA-G1 (manufactured by Sumitomo Chemical Co., Ltd.), DPN-250, DPN-250BX, DPN-245, DPN-270BX, DPB-550BX, and DPN-550RX (manufactured by Toda Kogyo Corp.), titanium oxide TTO-51B, TTO-55A, TTO-55B, TTO-55C, TTO-55S, TTO-55D, and SN-100, MJ-7, α-iron oxide E270, E271, and E300 (manufactured by Ishihara Sangyo Kaisha Ltd.), titanium oxide STT-4D, STT-30D, STT-30, and STT-65C (manufactured by Titan Kogyo Kabushiki Kaisha), MT-100S, MT-100T, MT-150W, MT-500B, MT-600B, MT-100F, and MT-500HD (manufactured by Tayca Corporation), FINEX-25, BF-1, BF-10, BF-20, and ST-M (manufactured by Sakai Chemical Industry Co., Ltd.), DEFIC-Y and DEFIC-R (manufactured by Dowa Mining Co., Ltd.), AS2BM and TiO2P25 (manufactured by Nippon Aerosil Co., Ltd.), 100A, and 500A (manufactured by Ube Industries, Ltd.), Y-LOP (manufactured by Titan Kogyo Kabushiki Kaisha), and calcined products thereof. Particularly preferred non-magnetic powders are titanium dioxide and α-iron oxide.

It is also possible to add an organic powder to the non-magnetic layer, depending on the intended purpose. Examples of such an organic powder include an acrylic styrene resin powder, a benzoguanamine resin powder, a melamine resin powder, and a phthalocyanine pigment, but a polyolefin resin powder, a polyester resin powder, a polyamide resin powder, a polyimide resin powder, and a polyfluoroethylene resin can also be used.

### Binder

With regard to the binder for the non-magnetic layer of the present invention, the same type as the binder used for a magnetic layer described later may be used singly, or in combination of 2 or more types.

### V. Magnetic layer

The magnetic recording medium of the present invention has a magnetic layer, the magnetic layer comprising a ferromagnetic powder dispersed in a binder. The magnetic layer is arranged above the non-magnetic layer, and, in many cases, is the outermost layer of the magnetic recording medium.

Examples of the ferromagnetic powder include ferromagnetic metal powders and ferromagnetic hexagonal ferrite powders. Description will be given below in this order.

### Ferromagnetic metal powder

A ferromagnetic metal powder used in the magnetic layer of the magnetic recording medium of the present invention is known to have excellent high density magnetic recording characteristics, and a magnetic recording medium having excellent electromagnetic conversion characteristics can be obtained. The ferromagnetic metal powder used in the magnetic layer of the magnetic recording medium of the present invention preferably has an average major axis length of 20 to 100 nm, more preferably 30 to 90 nm, and yet more preferably 40 to 80 nm. If the average major axis length of the ferromagnetic metal powder is no less than 20 nm, degradation of magnetic properties due to thermal fluctuations can be suppressed effectively. If the average major axis length is no greater than 100 nm, a good S/N ratio can be obtained while maintaining low noise.

The average major axis length of the ferromagnetic metal powder can be determined from an average of values obtained by the combined use of a method in which a transmission electron microscope photograph of the ferromagnetic metal powder is taken and the length of the minor axis and the length of the major axis of the ferromagnetic metal powder are measured directly therefrom, and a method in which a transmission electron microscope photograph is traced by an IBASSI image analyzer (manufactured by Carl Zeiss Inc.) and read off.

The ferromagnetic metal powder used in the magnetic layer of the magnetic recording medium of the present invention is not particularly limited as long as Fe is contained as a main component, and a ferromagnetic alloy powder having α-Fe as a main component is preferable. These ferromagnetic powders may contain, apart from the designated atom, atoms such as Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, and B. It is preferable for the powder to contain, in addition to α-Fe, at least one chosen from Al, Si, Ca, Y, Ba, La, Nd, Co, Ni, and B, and particularly preferably Co, Al, and Y. More specifically, the Co content is preferably 10 to 40 atom % relative to Fe, the Al content is preferably 2 to 20 atom %, and the Y content is preferably 1 to 15 atom %.

These ferromagnetic metal powders may be treated in advance, prior to dispersion, with a dispersant, a lubricant, a surfactant, an antistatic agent, etc., which will be described later. The ferromagnetic metal powder may contain a small amount of water, a hydroxide, or an oxide. The water content of the ferromagnetic metal powder is preferably set at 0.01 to 2 %. The water content of the ferromagnetic metal powder is preferably optimized according to the type of binder. The pH of the ferromagnetic metal powder is preferably optimized according to the binder used in combination therewith. The pH is usually in the range of 6 to 12, and preferably from 7 to 11. The ferromagnetic powder may contain soluble inorganic ions such as Na, Ca, Fe, Ni, Sr, NH₄, SO₄, Cl, NO₂, or NO₃ ions in some cases. It is preferable for them to be substantially absent, but their presence at 300 ppm or below does not particularly affect the characteristics. The ferromagnetic powder used in the present invention preferably has few pores, and the level thereof is 20 vol % or below, and more preferably 5 vol % or below.

The crystallite size of the ferromagnetic metal powder is preferably 8 to 20 nm, more preferably 10 to 18 nm, and particularly preferably 12 to 16 nm. The crystallite size is an average value obtained by the Scherrer method from a half-value width of a diffraction peak obtained using an X-ray diffractometer (RINT2000 series, manufactured by Rigaku Corporation) with a CuKα1 radiation source, a tube voltage of 50 kV, and a tube current of 300 mA.

The specific surface area by the BET method (S_{BET}) of the ferromagnetic metal powder is preferably 30 to 50 m²/g, and more preferably 38 to 48 m²/g. This enables both good surface properties and low noise to be achieved at the same time. The pH of the ferromagnetic metal powder is preferably optimized according to the binder used in combination therewith. The pH is in the range of 4 to 12, and preferably from 7 to 10. The ferromagnetic powder may be subjected to a surface treatment with Al, Si, P, or an oxide thereof, if necessary. The amount thereof is preferably 0.1 to 10 wt % relative to the ferromagnetic metal powder. The surface treatment can preferably suppress adsorption of a lubricant such as a fatty acid to 100 mg/m² or less. The ferromagnetic powder may contain soluble inorganic ions such as Na, Ca, Fe, Ni or Sr ions in some cases, and their presence at 200 ppm or less does not particularly affect the characteristics. Furthermore, the ferromagnetic metal powder used in the present invention preferably has few pores, and the level thereof is preferably 20 vol % or less, and more preferably 5 vol % or less.

The form of the ferromagnetic metal powder may be any of acicular, granular, rice-grain shaped, and tabular as long as the above-mentioned requirements for the particle size are satisfied, but it is particularly preferable to use an acicular ferromagnetic powder. In the case of the acicular ferromagnetic metal powder, the acicular ratio is preferably 4 to 12, and more preferably 5 to 12. The coercive force (Hc) of the ferromagnetic metal powder is preferably 159.2 to 238.8 kA/m, and more preferably 167.2 to 230.8 kA/m. The saturation magnetic flux density is preferably 150 to 300 mT, and more preferably 160 to 290 mT. The saturation magnetization (σs) is preferably 130 to 170 A·m²/kg (emu/g), and more preferably 135 to 160 A·m²/kg (emu/g).

The SFD (switching field distribution) of the magnetic substance itself is preferably low, and 0.8 or less is preferred. When the SFD is 0.8 or less, the electromagnetic conversion characteristics become good, the output becomes high, the magnetization reversal becomes sharp with a small peak shift, and it is suitable for high-recording-density digital magnetic recording. In order to narrow the Hc distribution, there is a technique of improving the particle distribution of goethite, a technique of using monodispersed α-Fe₂O₃, and a technique of preventing sintering between particles, etc. in the ferromagnetic metal powder.

The ferromagnetic metal powder can be obtained by a known production method and the following methods can be cited. There are a method in which hydrated iron oxide or iron oxide, on which a sintering prevention treatment has been carried out, is reduced with a reducing gas such as hydrogen to give Fe or Fe-Co particles, a method involving reduction with a composite organic acid salt (mainly an oxalate) and a reducing gas such as hydrogen, a method involving thermolysis of a metal carbonyl compound, a method involving reduction by the addition of a reducing agent such as sodium borohydride, a hypophosphite, or hydrazine to an aqueous solution of a ferromagnetic metal, a method in which a fine powder is obtained by vaporizing a metal in an inert gas at low pressure, etc. The ferromagnetic metal powder thus obtained can be subjected to a known slow oxidation process. A method in which hydrated iron oxide or iron oxide is reduced with a reducing gas such as hydrogen, and an oxide film is formed on the surface thereof by controlling the time and the partial pressure and temperature of an oxygen-containing gas and an inert gas is preferable since there is little loss of magnetization.

### Ferromagnetic hexagonal ferrite powder

The ferromagnetic hexagonal ferrite powder has a hexagonal magnetoplumbite structure, and as a result has extremely large uniaxial magnetic anisotropy and very high coercive force (Hc). Because of this, the magnetic recording medium employing the ferromagnetic hexagonal ferrite powder has excellent chemical stability, corrosion resistance, and wear resistance, enables the magnetic spacing to be decreased accompanying higher density, enables a thin film to be realized, and achieves a high C/N and resolution. The ferromagnetic hexagonal ferrite powder has an average plate size of 5 to 40 nm, preferably 10 to 38 nm, and more preferably 15 to 36 nm. In general, when the track density is increased and playback is carried out using an MR head, it is necessary to reduce the noise and decrease the average plate size of the ferromagnetic hexagonal ferrite powder. From the viewpoint of decreasing the magnetic spacing, it is preferable that the average plate size of the hexagonal ferrite is as small as possible. However, when the average plate size of the ferromagnetic hexagonal ferrite powder is too small, the magnetization becomes unstable due to thermal fluctuations. The lower limit value of the average plate size of the ferromagnetic hexagonal ferrite powder used in the magnetic layer of the magnetic recording medium of the present invention is therefore 5 nm. If the average plate size is no less than 5 nm, there is little influence from thermal fluctuations, and stable magnetization can be obtained. On the other hand, the upper limit value of the average plate size of the ferromagnetic hexagonal ferrite powder is 40 nm. If the average plate size is no greater than 40 nm, degradation of electromagnetic conversion characteristics due to an increase in noise can be suppressed and, in particular, it is suitable for playback using an MR head. The average plate size of the ferromagnetic hexagonal ferrite powder can be determined from an average of values obtained by the combined use of a method in which a transmission electron microscope photograph of the ferromagnetic hexagonal ferrite powder is taken and the plate size is measured directly therefrom, and a method in which a transmission electron microscope photograph is traced by an IBASSI image analyzer (manufactured by Carl Zeiss Inc.) and read off.

Examples of the ferromagnetic hexagonal ferrite powder contained in the magnetic layer of the present invention include substitution products of barium ferrite, strontium ferrite, lead ferrite, and calcium ferrite, and Co substitution products. More specifically, magnetoplumbite type barium ferrite and strontium ferrite, magnetoplumbite type ferrite with a particle surface coated with a spinel, magnetoplumbite type barium ferrite and strontium ferrite partially containing a spinel phase, etc., can be cited. In addition to the designated atoms, an atom such as Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge, Nb, or Zr may be included. In general, those to which Co-Zn, Co-Ti, Co-Ti-Zr, Co-Ti-Zn, Ni-Ti-Zn, Nb-Zn-Co, Sb-Zn-Co, Nb-Zn, etc. have been added can be used. Characteristic impurities may be included depending on the starting material and the production process.

The plate size of the ferromagnetic hexagonal ferrite powder is preferably 5 to 40 nm, more preferably 10 to 38 nm, and yet more preferably 15 to 36 nm. The average plate thickness is preferably 1 to 30 nm, more preferably 2 to 25 nm, and yet more preferably 3 to 20 nm. The tabular ratio (plate size/plate thickness) is preferably 1 to 15, and more preferably 1 to 7. It is preferable if the tabular ratio is 1 to 15 since adequate orientation can be obtained while maintaining a high packing ratio of the magnetic layer, and noise due to inter-particle stacking decreases. The S_{BET} of a powder having a particle size within this range is usually 10 to 200 m²/g. The specific surface area substantially coincides with the value obtained by calculation using the plate size and the plate thickness.

The plate size and the plate thickness distributions of the ferromagnetic hexagonal ferrite powder are preferably as narrow as possible. Although it is difficult, the distribution can be expressed using a numerical value by randomly measuring 500 particles on a TEM photograph of the particles. The distribution of the particle plate size and plate thickness is not a regular distribution in many cases, but the standard deviation calculated with respect to the average size is preferably σ/average size = 0.1 to 2.0. In order to narrow the particle size distribution, the reaction system used for forming the particles is made as homogeneous as possible, and the particles so formed are subjected to a distribution-improving treatment. For example, a method of selectively dissolving ultrafine particles in an acid solution is also known.

The coercive force (Hc) measured for the hexagonal ferrite particles can be adjusted so as to be in the range of 159.2 to 238.8 kA/m, more preferably 175.1 to 222.9 kA/m, and yet more preferably 183.1 to 214.9 kA/m. When the saturation magnetization of the head exceeds 1.4 T, it is preferably 159.2 kA/m or less. The Hc can be controlled by the particle size (plate size, plate thickness), the type and amount of element included, the element replacement sites, the conditions used for the particle formation reaction, etc.

The saturation magnetization (σs) of the hexagonal ferrite particles is preferably 40 to 80 A·m²/kg. A higher σs is preferable, but there is a tendency for it to become lower when the particles become finer. In order to improve the σs, making a composite of magnetoplumbite ferrite with spinel ferrite, selecting the types of element included and their amount, etc. are well known. It is also possible to use a W type hexagonal ferrite. When dispersing the magnetic substance, the surface of the magnetic substance particles can be treated with a material that is compatible with a dispersing medium and the polymer. With regard to a surface-treatment agent, an inorganic or organic compound can be used. Representative examples include oxides and hydroxides of Si, Al, P, etc., and various types of silane coupling agents and various kinds of titanium coupling agents. The amount thereof is preferably 0.1% to 10% based on the magnetic substance. The pH of the magnetic substance is also important for dispersion. It is usually on the order of 4 to 12, and although the optimum value depends on the dispersing medium and the polymer, it is selected from on the order of 6 to 10 from the viewpoints of chemical stability and storage properties of the magnetic recording medium. The moisture contained in the magnetic substance also influences the dispersion. Although the optimum value depends on the dispersing medium and the polymer, it is usually preferably 0.01 % to 2.0%.

With regard to a production method for the ferromagnetic hexagonal ferrite powder, there is a glass crystallization method in which barium oxide, iron oxide, a metal oxide that replaces iron, and boron oxide, etc. as glass forming materials are mixed so as to give a desired ferrite composition, then melted and rapidly cooled to give an amorphous substance, subsequently reheated, then washed and ground to give a barium ferrite crystal powder; a hydrothermal reaction method in which a barium ferrite composition metal salt solution is neutralized with an alkali, and after a by-product is removed, it is heated in a liquid phase at 100°C or higher, then washed, dried and ground to give a barium ferrite crystal powder; a co-precipitation method in which a barium ferrite composition metal salt solution is neutralized with an alkali, and after a by-product is removed, it is dried and treated at 1,100°C or less, and ground to give a barium ferrite crystal powder, etc., but any production method can be used in the present invention. The ferromagnetic hexagonal ferrite powder may be subjected to a surface treatment with Si, Al, P, or an oxide thereof, etc. as necessary. The amount thereof is 0.1 % to 10% relative to the ferromagnetic powder. It is preferable to carry out the surface treatment since the adsorption of a lubricating agent such as a fatty acid becomes 100 mg/m² or less. The ferromagnetic powder may contain soluble inorganic ions such as Na, Ca, Fe, Ni or Sr ions in some cases. Although it is preferable for them to be substantially absent, their presence at 200 ppm or less does not particularly affect the characteristics.

### Binder

A conventionally known thermoplastic resin, thermosetting resin, reactive resin or a mixture thereof is used as a binder in the magnetic layer of the present invention. Examples of the thermoplastic resin include polymers and copolymers containing as a repeating unit vinyl chloride, vinyl acetate, vinyl alcohol, maleic acid, acrylic acid, an acrylate ester, vinylidene chloride, acrylonitrile, methacrylic acid, a methacrylate ester, styrene, butadiene, ethylene, vinyl butyral, vinyl acetal and vinyl ether; polyurethane resins, and various types of rubber resins.

Examples of the thermosetting resin and the reactive resin include phenol resins, epoxy resins, curing type polyurethane resins, urea resins, melamine resins, alkyd resins, reactive acrylic resins, formaldehyde resins, silicone resins, epoxy-polyamide resins, mixtures of a polyester resin and an isocyanate prepolymer, mixtures of a polyester polyol and a polyisocyanate, and mixtures of a polyurethane and a polyisocyanate. Details of these resins are described in the 'Purasuchikku Handobukku' (Plastic Handbook) published by Asakura Shoten.

When an electron beam-curing resin is used in the magnetic layer, not only is the coating strength increased and the durability improved, but also the surface is smoothed and the electromagnetic conversion characteristics are further improved.

The above-mentioned resins may be used singly or in combination. Among them, the polyurethane resin is preferable, and more preferable are a hydrophilic polar group-containing polyurethane resin obtained by reacting, with an organic diisocyanate, hydrogenated bisphenol A, a polyol having a molecular weight of 500 to 5,000 and having an alkylene oxide chain and a cyclic structure, such as a polypropylene oxide adduct of hydrogenated bisphenol A, and a polyol having a cyclic structure and a molecular weight of 200 to 500 as a chain extending agent; a hydrophilic polar group-containing polyurethane resin obtained by reacting, with an organic diisocyanate compound, a polyester polyol formed from an aliphatic dibasic acid such as succinic acid, adipic acid, or sebacic acid and an aliphatic diol having a branched alkyl side chain and no cyclic structure such as 2,2-dimethyl-1,3-propanediol, 2-ethyl-2-butyl-1,3-propanediol, or 2,2-diethyl-1,3-propanediol, and an aliphatic diol having a branched alkyl side chain having 3 or more carbons such as 2-ethyl-2-butyl-1,3-propanediol or 2,2-diethyl-1,3-propanediol as a chain extending agent; or a hydrophilic polar group-containing polyurethane resin obtained by reacting an organic diisocyanate with a polyol compound having a cyclic structure and a long alkyl chain, such as dimer diol.

The average molecular weight of the polar group-containing polyurethane resin used in the present invention is preferably 5,000 to 100,000, and more preferably 10,000 to 50,000. It is preferable if the average molecular weight is 5,000 or more, since there is no reduction in the physical strength such as the magnetic coating being brittle, and there is no influence on the durability of the magnetic recording medium. Furthermore, when the average molecular weight is 100,000 or less, since the solubility in a solvent is not degraded, the dispersibility is good. Moreover, since the coating viscosity at a predetermined concentration does not increase, the workability is good, and the handling is easy.

Examples of the polar group contained in the above-mentioned polyurethane resin include -COOM, -SO₃M, -OSO₃M, -P=O(OM)₂, -O-P=O(OM)₂ (where M represents a hydrogen atom or an alkali metal salt), -OH, -NR₂, -N⁺R₃ (R represents a hydrocarbon group), an epoxy group, -SH, and -CN. Polyurethane resins into which at least one of these polar groups has been introduced by copolymerization or an addition reaction can be used. When this polar group-containing polyurethane resin has an OH group, it is preferable for the OH group to be on a side chain from the viewpoint of curability and durability, and the number of OH groups on the side chain is preferably 2 to 40 per molecule, and more preferably 3 to 20 per molecule. The polar group content is preferably 10⁻¹ to 10⁻⁸ mol/g, and more preferably from 10⁻² to 10⁻⁶ mol/g.

Specific examples of the binder include VAGH, VYHH, VMCH, VAGF, VAGD, VROH, VYES, VYNC, VMCC, XYHL, XYSG, PKHH, PKHJ, PKHC and PKFE (manufactured by Union Carbide Corporation), MPR-TA, MPR-TA5, MPR-TAL, MPR-TSN, MPR-TMF, MPR-TS, MPR-TM and MPR-TAO (manufactured by Nisshin Chemical Industry Co., Ltd.), 1000W, DX80, DX81, DX82, DX83 and 100FD (manufactured by Denki Kagaku Kogyo Kabushiki Kaisha), MR-104, MR-105, MR-110, MR-100, MR-555 and 400X-110A (manufactured by Nippon Zeon Corporation), Nippollan N2301, N2302 and N2304 (manufactured by Nippon Polyurethane Industry Co., Ltd.), Pandex T-5105, T-R3080 and T-5201, Burnock D-400, D-210-80, Crisvon 6109 and 7209 (manufactured by Dainippon Ink and Chemicals, Incorporated), Vylon UR8200, UR8300, UR8700, RV530 and RV280 (manufactured by Toyobo Co., Ltd.), Daiferamine 4020, 5020, 5100, 5300, 9020, 9022 and 7020 (manufactured by Dainichiseika Color & Chemicals Mfg. Co., Ltd.), MX5004 (manufactured by Mitsubishi Chemical Corp.), Sanprene SP-150 (manufactured by Sanyo Chemical Industries, Ltd.), and Saran F310 and F210 (manufactured by Asahi Kasei Corporation).

The amount of binder used in the magnetic layer of the present invention is in the range of 5 to 50 wt %, and preferably 10 to 30 wt % relative to the weight of the magnetic powder (ferromagnetic metal powder or ferromagnetic hexagonal ferrite powder). When a polyurethane resin is used, the amount thereof is preferably 2 to 20 wt %, the amount of polyisocyanate is preferably 2 to 20 wt %, and they are preferably used in combination, but if, for example, head corrosion is caused by a slight degree of dechlorination, it is possible to use a polyurethane alone or a combination of a polyurethane and an isocyanate alone. When a vinyl chloride resin is used as another resin the amount thereof is preferably in the range of 5 to 30 wt %. When a polyurethane is used in the present invention, the polyurethane preferably has a glass transition temperature of -50°C to 150°C, and more preferably 0°C to 100°C, an elongation at break of 100% to 2,000%, a breaking stress of 0.49 to 98 MPa, and a yield point of 0.49 to 98 MPa.

The magnetic recording medium used in the present invention comprises the non-magnetic support, the reinforcing layer, the non-magnetic layer, and at least one magnetic layer. Accordingly, the amount of binder, the contents of the vinyl chloride resin, polyurethane resin, polyisocyanate or other resin contained in the binder, the molecular weight of each of the resins forming the magnetic layer, the polar group content, and the above-mentioned physical properties of the resins, etc. can of course be varied in the non-magnetic layer and each of the magnetic layers as necessary, but it is better if these factors are optimized individually for the respective layers, and known techniques relating to multiple magnetic layers can be employed. For example, when the amount of binder is varied among the layers, increasing the amount of binder contained in the magnetic layer is effective in reducing scratches on the surface of the magnetic layer. For the purpose of improving head contact, the amount of binder in the non-magnetic layer can be increased, thereby imparting flexibility.

Examples of the polyisocyanate used in the present invention include isocyanates such as tolylene diisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate, and triphenylmethane triisocyanate; reaction products of these isocyanates with a polyalcohol; and polyisocyanates formed by an isocyanate condensation reaction. These isocyanates are commercially available under the trade names of Coronate L, Coronate HL, Coronate 2030, Coronate 2031, Millionate MR and Millionate MTL (manufactured by Nippon Polyurethane Industry Co., Ltd.), Takenate D-102, Takenate D-110N, Takenate D-200 and Takenate D-202 (manufactured by Takeda Chemical Industries, Ltd.), and Desmodur L, Desmodur IL, Desmodur N and Desmodur HL (manufactured by Sumitomo Bayer Urethane Co., Ltd.). These isocyanates may be used in each of the layers, either singly or in combinations of two or more thereof, taking advantage of a difference in curing reactivity.

### Other additives

The magnetic layer of the present invention can contain an additive as necessary. Examples of the additive include an abrasive, a lubricant, a dispersant, a fungicide, an antistatic agent, an antioxidant, a solvent, and carbon black.

Examples of these additives include molybdenum disulfide, tungsten disulfide, graphite, boron nitride, graphite fluoride, a silicone oil, a polar group-containing silicone, a fatty acid-modified silicone, a fluorine-containing silicone, a fluorine-containing alcohol, a fluorine-containing ester, a polyolefin, a polyglycol, a polyphenyl ether; aromatic ring-containing organic phosphonic acids such as phenylphosphonic acid, and alkali metal salts thereof; alkylphosphonic acids such as octylphosphonic acid, and alkali metal salts thereof; aromatic phosphates such as phenyl phosphate, and alkali metal salts thereof; alkyl phosphates such as octyl phosphate, and alkali metal salts thereof; alkyl sulfonates and alkali metal salts thereof; fluorine-containing alkyl sulfates and alkali metal salts thereof; monobasic fatty acids that have 10 to 24 carbons, may contain an unsaturated bond, and may be branched, such as lauric acid, and metal salts thereof; mono-fatty acid esters, di-fatty acid esters, and poly-fatty acid esters such as butyl stearate that are formed from a monobasic fatty acid that has 10 to 24 carbons, may contain an unsaturated bond, and may be branched, and any one of a mono- to hexa-hydric alcohol that has 2 to 22 carbons, may contain an unsaturated bond, and may be branched, an alkoxy alcohol that has 12 to 22 carbons, may have an unsaturated bond, and may be branched, and a mono alkyl ether of an alkylene oxide polymer; fatty acid amides having 2 to 22 carbons; aliphatic amines having 8 to 22 carbons; etc. Other than the above-mentioned hydrocarbon groups, those having an alkyl, aryl, or aralkyl group that is substituted with a group other than a hydrocarbon group, such as a nitro group, F, Cl, Br, or a halogen-containing hydrocarbon such as CF₃, CCl₃, or CBr₃ can also be used. Furthermore, there are a nonionic surfactant such as an alkylene oxide type, a glycerol type, a glycidol type, or an alkylphenol-ethylene oxide adduct; a cationic surfactant such as a cyclic amine, an ester amide, a quaternary ammonium salt, a hydantoin derivative, a heterocyclic compound, a phosphonium salt, or a sulfonium salt; an anionic surfactant containing an acidic group such as a carboxylic acid, a sulfonic acid, or a sulfate ester group; and an amphoteric surfactant such as an amino acid, an aminosulfonic acid, a sulfate ester or a phosphate ester of an amino alcohol, or an alkylbetaine.

Details of these surfactants are described in 'Kaimenkasseizai Binran' (Surfactant Handbook) (published by Sangyo Tosho Publishing). These additives need not always be pure and may contain, in addition to the main component, an impurity such as an isomer, an unreacted material, a by-product, a decomposition product, or an oxide. However, the impurity content is preferably 30 wt % or less, and more preferably 10 wt % or less. Specific examples of these additives include NAA-102, hardened castor oil fatty acid, NAA-42, Cation SA, Nymeen L-201, Nonion E-208, Anon BF, and Anon LG, (produced by Nippon Oil & Fats Co., Ltd.); FAL-205, and FAL-123 (produced by Takemoto Oil & Fat Co., Ltd), Enujelv OL (produced by New Japan Chemical Co., Ltd.), TA-3 (produced by Shin-Etsu Chemical Industry Co., Ltd.), Armide P (produced by Lion Armour), Duomin TDO (produced by Lion Corporation), BA-41G (produced by The Nisshin Oil Mills, Ltd.), Profan 2012E, Newpol PE 61, and lonet MS-400 (produced by Sanyo Chemical Industries, Ltd.).

By adding carbon black to the magnetic layer and the non-magnetic layer of the present invention, the surface electrical resistance can be reduced, and a desired µVickers hardness can be obtained. The µVickers hardness is preferably 25 to 60 kg/mm², and is more preferably 30 to 50 kg/mm² in order to adjust the head contact, and can be measured using a thin film hardness meter (HMA-400 manufactured by NEC Corporation) with, as an indentor tip, a triangular pyramidal diamond needle having a tip angle of 80° and a tip radius of 0.1 µm. Examples of carbon black that can be used in the magnetic layer and the non-magnetic layer include furnace black for rubber, thermal black for rubber, carbon black for coloring, and acetylene black.

The specific surface area is preferably 5 to 500 m²/g, the DBP oil absorption is preferably 10 to 400 mL/100 g, the particle size is preferably 5 to 300 nm, the pH is preferably 2 to 10, the water content is preferably 0.1 % to 10%, and the tap density is preferably 0.1 to 1 g/mL. Specific examples of the carbon black used in the non-magnetic layer of the present invention include BLACKPEARLS 2000, 1300, 1000, 900, 905, 800, and 700, and VULCAN XC-72 (manufactured by Cabot Corporation), #80, #60, #55, #50, and #35 (manufactured by Asahi Carbon), #3050B, #3150B, #3250B, #3750B, #3950B, #2400B, #2300, #1000, #970B, #950, #900, #850B, #650B, #30, #40, #10B, and MA-600 (manufactured by Mitsubishi Chemical Corporation), CONDUCTEX SC, RAVEN 8800, 8000, 7000, 5750, 5250, 3500, 2100, 2000, 1800, 1500, 1255, 1250, 150, 50, 40, and 15, and RAVEN-MT-P (manufactured by Columbian Carbon Co.), and Ketjen Black EC (manufactured by Akzo).

The carbon black may be subjected to any of a surface treatment with a dispersant, etc., grafting with a resin, or a partial surface graphitization. The carbon black may also be dispersed in a binder prior to addition to a coating solution. The carbon black may be used singly or in a combination of different types thereof. When the carbon black is used, it is preferably used in an amount of 0.1 to 30 wt % based on the weight of the magnetic substance. The carbon black has the functions of preventing static charging of the magnetic layer, reducing the coefficient of friction, imparting light-shielding properties, and improving the film strength. Such functions vary depending upon the type of carbon black. Accordingly, it is of course possible in the present invention to appropriately choose the type, the amount and the combination of carbon black for the magnetic layer and the non-magnetic layer according to the intended purpose on the basis of the above mentioned various properties such as the particle size, the oil absorption, the electrical conductivity, and the pH value, and it is better if they are optimized for the respective layers. The carbon black that can be used for the magnetic layer of the present invention can be selected by referring to, for example, the 'Kabon Burakku Handobukku' (Carbon Black Handbook) (edited by the Carbon Black Association of Japan).

An organic solvent used in the present invention can be a known organic solvent. As the organic solvent, a ketone such as acetone, methyl ethyl ketone, methyl isobutyl ketone, diisobutyl ketone, cyclohexanone, or isophorone, an alcohol such as methanol, ethanol, propanol, butanol, isobutyl alcohol, isopropyl alcohol, or methylcyclohexanol, an ester such as methyl acetate, butyl acetate, isobutyl acetate, isopropyl acetate, ethyl lactate, or glycol acetate, a glycol ether such as glycol dimethyl ether, glycol monoethyl ether, or dioxane, an aromatic hydrocarbon such as benzene, toluene, xylene, or cresol, a chlorohydrocarbon such as methylene chloride, ethylene chloride, carbon tetrachloride, chloroform, ethylene chlorohydrin, chlorobenzene, or dichlorobenzene, *N,N-*dimethylformamide, hexane, tetrahydrofuran, etc. can be used at any ratio. These organic solvents do not always need to be 100% pure, and may contain an impurity such as an isomer, an unreacted compound, a by-product, a decomposition product, an oxide, or moisture in addition to the main component. The content of these impurities is preferably 30% or less, and more preferably 10% or less. When there is a non-magnetic layer, the organic solvent used in the present invention is preferably the same type for both the magnetic layer and the non-magnetic layer. However, the amount added may be varied. The coating stability is improved by using a high surface tension solvent (cyclohexanone, dioxane, etc.) for the non-magnetic layer; more specifically, it is important that the arithmetic mean value of the surface tension of the magnetic layer solvent composition is not less than that for the surface tension of the non-magnetic layer solvent composition. In order to improve the dispersibility, it is preferable for the polarity to be somewhat strong, and the solvent composition preferably contains 50% or more of a solvent having a permittivity of 15 or higher. The solubility parameter is preferably 8 to 11.

These dispersants, lubricants, and surfactants used in the present invention may be selected as necessary in terms of the type and amount according to the magnetic layer and/or the non-magnetic layer. For example, although these examples should not be construed as being limited thereto, the dispersant has the property of adsorbing or bonding via its polar group, and it is adsorbed on or bonds to the surface of mainly the ferromagnetic powder in the magnetic layer and the surface of mainly the non-magnetic powder in the non-magnetic layer via the polar group; it is surmised that once an organophosphorus compound has been adsorbed on the surface of a metal, a metal compound, etc. it is difficult for it to desorb. In the present invention, the surface of the ferromagnetic powder (ferromagnetic metal powder and ferromagnetic hexagonal ferrite powder) or the surface of the non-magnetic powder is therefore covered with an alkyl group, an aromatic group, etc., the affinity of the ferromagnetic powder or the non-magnetic powder toward the binder resin component increases, and the dispersion stability of the ferromagnetic powder or the non-magnetic powder is also improved. Furthermore, with regard to the lubricant, since it is present in a free state, it is surmised that by using fatty acids having different melting points in the non-magnetic layer and the magnetic layer exudation onto the surface is controlled, by using esters having different boiling points or polarity exudation onto the surface is controlled, by adjusting the amount of surfactant the coating stability is improved, and by increasing the amount of lubricant added to the non-magnetic layer the lubrication effect is improved. All or a part of the additives used in the present invention may be added to a magnetic coating solution or a non-magnetic coating solution at any stage of its preparation. For example, the additives may be blended with a ferromagnetic powder prior to a kneading step, they may be added in a step of kneading a ferromagnetic powder, a binder, and a solvent, they may be added in a dispersing step, they may be added after dispersion, or they may be added immediately prior to coating.

### VI. Backcoat layer and adhesion promotion layer

In general, there is a strong requirement for magnetic tapes for recording computer data to have better repetitive transport properties than video tapes and audio tapes. In order to maintain such high transport durability, a backcoat layer can be provided on the surface of the non-magnetic support opposite to the surface where the non-magnetic layer and the magnetic layer is provided. As a coating solution for the backcoat layer, a binder, an abrasive, an antistatic agent, etc. are dispersed in an organic solvent. As a granular component, various types of inorganic pigment or carbon black can be used. As the binder, a resin such as nitrocellulose, a phenoxy resin, a vinyl chloride resin, or a polyurethane can be used singly or in combination.

The magnetic recording medium of the present invention may be provided with an adhesion promotion layer for the purpose of improving the adhesion between the non-magnetic support and the reinforcing layer, between the non-magnetic support and the smoothing layer, between the reinforcing layer and the non-magnetic layer, and/or between the non-magnetic support and the backcoat layer. The adhesion promotion layer may be provided between the reinforcing layer and the smoothing layer, and in the case of the non-magnetic layer being provided, the adhesion promotion layer may be provided between the smoothing layer and the non-magnetic layer. For the adhesion promotion layer, for example, a solvent-soluble material can be used. Examples thereof include a polyester resin, a polyamide resin, a polyamideimide resin, a polyurethane resin, a vinyl chloride resin, a vinylidene chloride resin, a phenol resin, an epoxy resin, a urea resin, a melamine resin, a formaldehyde resin, a silicone resin, starch, a modified starch compound, an alginic acid compound, casein, gelatin, pullulan, dextran, chitin, chitosan, rubber latex, gum arabic, glue plant, natural gum, dextrin, a modified cellulose resin, a polyvinyl alcohol resin, polyethylene oxide, a polyacrylic acid resin, polyvinylpyrrolidone, polyethyleneimine, polyvinyl ether, a maleic acid copolymer, polyacrylamide, and an alkyd resin.

The adhesion promotion layer preferably has a thickness of 0.01 to 3.0 µm, more preferably 0.02 to 2.0 µm, and yet more preferably 0.05 to 1.5 µm. The glass transition temperature of the resin used in the adhesion promotion layer is preferably 0°C to 120°C, more preferably 30°C to 120°C, and particularly preferably 40°C to 80°C. If it is no less than 0°C, blocking at the end face does not occur, and if it is no greater than 120°C, the internal stress of the adhesion promotion layer can be relaxed, and the adhesion is excellent.

### VII. Layer structure

The magnetic recording medium of the present invention comprises a non-magnetic support, and above at least one surface thereof, at least two coatings. That is, the non-magnetic layer is provided above the non-magnetic support, and the magnetic layer is provided above the non-magnetic layer, and the magnetic layer may comprise two or more layers as necessary. A backcoat layer may be provided on the surface of the non-magnetic support on the reverse side as necessary. The magnetic recording medium of the present invention may be provided, above the magnetic layer, with a lubricant coating or various types of coatings for protecting the magnetic layer as necessary. Furthermore, an undercoat layer (adhesion promotion layer) may be provided between the non-magnetic support and the reinforcing layer and/or the backcoat layer for the purpose of improving the adhesion between the coating and the non-magnetic support.

The magnetic recording medium of the present invention may be provided with the non-magnetic layer and the magnetic layer above at least one surface of the non-magnetic support, but it may be provided above both surfaces thereof. In the case of the non-magnetic layer being provided, the non-magnetic layer and the magnetic layer may be provided above one surface of the non-magnetic support, but they may be provided above both surfaces thereof. With regard to a method for applying the non-magnetic layer (lower layer) and the magnetic layer (upper layer), the upper layer magnetic layer may be provided after the lower layer is applied and while the lower layer is in a wet state or after it is dried. From the viewpoint of productivity, simultaneous or successive wet coating is preferable, but in the case of a disk form, coating after drying may be used adequately. In the simultaneous or successive wet coating for the multilayer structure of the present invention, since the upper layer and the lower layer are formed simultaneously, a surface treatment step such as a calendering step can be carried out effectively, and the surface roughness of the upper layer magnetic layer can be improved even for an ultra thin layer.

The structure in the thickness direction of the magnetic recording medium is such that the thickness of the non-magnetic support is preferably 3 to 80 µm. The thickness of the non-magnetic support when used for computer tape is preferably 3.5 to 7.5 µm, more preferably 3 to 7 µm. When the undercoat layer is provided between the non-magnetic support and the reinforcing layer, between the non-magnetic support and the smoothing layer, between the reinforcing layer and the non-magnetic layer, and/or between the non-magnetic support and the backcoat layer, the thickness of the undercoat layer is preferably 0.01 to 0.8 µm, and more preferably 0.02 to 0.6 µm. The backcoat layer, which is provided on a surface of the non-magnetic support on the side opposite to a surface where the magnetic layer is provided, preferably has a thickness of 0.1 to 1.0 µm, and more preferably 0.2 to 0.8 µm.

The reinforcing layer of the present invention preferably has a thickness of 20 to 500 nm, and more preferably 50 to 300 nm. The reinforcing layer may comprise either a single layer or multiple layers.

The thickness of the magnetic layer is optimized according to the saturation magnetization and the head gap of the magnetic head and the bandwidth of the recording signal, but it is preferably 10 to 200 nm, more preferably 20 to 200 nm, and yet more preferably 30 to 200 nm. The percentage variation in thickness of the magnetic layer is preferably ±50% or less, and more preferably ±40% or less. The magnetic layer can be at least one layer, but it is also possible to provide two or more separate layers having different magnetic properties, and a known configuration for a multilayer magnetic layer can be employed.

The thickness of the non-magnetic layer of the present invention is preferably 0.02 to 3.0 µm, more preferably 0.05 to 2.5 µm, and yet more preferably 0.1 to 2.0 µm. The non-magnetic layer of the magnetic recording medium of the present invention can exhibit its effect if it is substantially non-magnetic, but even if a small amount of a magnetic substance is included as an impurity or intentionally, the effects of the present invention are exhibited, and this is considered to have substantially the same constitution as that of the magnetic recording medium of the present invention. 'Substantially the same' referred to here means that the non-magnetic layer has a residual magnetic flux density of 10 mT (100 G) or less or a coercive force of 7.96 kA/m (100 Oe) or less, and preferably has no residual magnetic flux density and no coercive force.

Combinations of the preferable thickness of each of the layers are also preferable.

### VIII. Physical properties

The saturation magnetic flux density of the magnetic layer of the magnetic recording medium used in the present invention is preferably 100 to 300 mT. The coercive force (Hc) of the magnetic layer is preferably 143.3 to 318.4 kA/m, and more preferably 159.2 to 278.6 kA/m. It is preferable for the coercive force distribution to be narrow, and the SFD and SFDr are preferably 0.6 or less, and more preferably 0.2 or less.

The coefficient of friction, with respect to a head, of the magnetic recording medium used in the present invention is preferably 0.5 or less at a temperature of -10°C to 40°C and a humidity of 0% to 95%, and more preferably 0.3 or less. The surface resistivity is preferably 10⁴ to 10¹² Ω/sq on the magnetic surface, and the electrostatic potential is preferably -500 V to +500 V. The modulus of elasticity of the magnetic layer at an elongation of 0.5% is preferably 0.98 to 19.6 GPa in each direction within the plane, and the breaking strength is preferably 98 to 686 MPa; the modulus of elasticity of the magnetic recording medium is preferably 0.98 to 14.7 GPa in each direction within the plane, the residual elongation is preferably 0.5% or less, and the thermal shrinkage at any temperature up to and including 100°C is preferably 1% or less, more preferably 0.5% or less, and most preferably 0.2% or less.

The glass transition temperature of the magnetic layer (the maximum point of the loss modulus in a dynamic viscoelasticity measurement at 110 Hz) is preferably 50°C to 180°C, and that of the non-magnetic layer is preferably 0°C to 180°C. The loss modulus is preferably in the range of 1 x 10⁷ to 8 x 10⁸ Pa, and the loss tangent is preferably 0.2 or less. If the loss tangent is too large, the problem of tackiness easily occurs. These thermal properties and mechanical properties are preferably substantially identical to within 10% in each direction in the plane of the medium.

The residual solvent in the magnetic layer is preferably 100 mg/m² or less, and more preferably 10 mg/m² or less. The porosity of the coating layer is preferably 30 vol % or less for both the non-magnetic layer and the magnetic layer, and more preferably 20 vol % or less. In order to achieve a high output, the porosity is preferably small, but there are cases in which a certain value should be maintained depending on the intended purpose. For example, in the case of disk media where repetitive use is considered to be important, a large porosity is often preferable from the point of view of transport durability.

The maximum height SRₘₐₓ of the magnetic layer is preferably 0.5 µm or less, the ten-point average roughness SRz is 0.3 µm or less, the center plane peak height SRp is 0.3 µm or less, the center plane valley depth SRv is 0.3 µm or less, the center plane area factor SSr is 20% to 80%, and the average wavelength Sλa is 5 to 300 µm. They can be controlled easily by controlling the surface properties of the support by means of a filler, and the shape of the roll surface in the calendering process. The curl is preferably within ±3 mm.

It can easily be anticipated that the physical properties of the non-magnetic layer and the magnetic layer of the present invention can be varied according to the intended purpose. For example, the elastic modulus of the magnetic layer can be made high, thereby improving the transport durability, and at the same time the elastic modulus of the non-magnetic layer can be made lower than that of the magnetic layer, thereby improving the head contact of the magnetic recording medium.

### IX. Production Method

A process for producing a magnetic layer coating solution for the magnetic recording medium used in the present invention comprises at least a kneading step, a dispersing step and, optionally, a blending step that is carried out prior to and/or subsequent to the above-mentioned steps. Each of these steps may be composed of two or more separate stages. All materials, including the ferromagnetic hexagonal ferrite powder, the ferromagnetic metal powder, the non-magnetic powder, a benzenesulfonic acid derivative, a conjugated π-electron conductive polymer, the binder, the carbon black, the abrasive, the antistatic agent, the lubricant, and the solvent used in the present invention may be added in any step from the beginning or during the course of the step. The addition of each material may be divided across two or more steps. For example, a polyurethane can be divided and added in a kneading step, a dispersing step, and a blending step for adjusting the viscosity after dispersion. To attain the object of the present invention, a conventionally known production technique may be employed as a part of the steps. In the kneading step, it is preferable to use a powerful kneading machine such as an open kneader, a continuous kneader, a pressure kneader, or an extruder. When a kneader is used, all or a part of the binder (preferably 30 wt % or above of the entire binder) is preferably kneaded with the magnetic powder or the non-magnetic powder at 15 to 500 parts by weight of the binder relative to 100 parts by weight of the ferromagnetic powder. Details of these kneading treatments are described in JP-A-1-106338 and JP-A-1-79274. For the dispersion of the magnetic layer solution and a non-magnetic layer solution, glass beads can be used. As such glass beads, a dispersing medium having a high specific gravity such as zirconia beads, titania beads, or steel beads is suitably used. An optimal particle size and packing density of these dispersing media is used. A known disperser can be used.

The process for producing the magnetic recording medium of the present invention includes, for example, coating the surface of a moving non-magnetic support with a magnetic layer coating solution so as to give a predetermined coating thickness. A plurality of magnetic layer coating solutions can be applied successively or simultaneously in multilayer coating, and a lower magnetic layer coating solution and an upper magnetic layer coating solution can also be applied successively or simultaneously in multilayer coating. As coating equipment for applying the above-mentioned magnetic layer coating solution or the non-magnetic layer coating solution, an air doctor coater, a blade coater, a rod coater, an extrusion coater, an air knife coater, a squeegee coater, a dip coater, a reverse roll coater, a transfer roll coater, a gravure coater, a kiss coater, a cast coater, a spray coater, a spin coater, etc. can be used. With regard to these, for example, 'Saishin Kotingu Gijutsu' (Latest Coating Technology) (May 31, 1983) published by Sogo Gijutsu Center can be referred to.

In the case of a magnetic tape, the coated layer of the magnetic layer coating solution is subjected to a magnetic field alignment treatment in which the ferromagnetic powder contained in the coated layer of the magnetic layer coating solution is aligned in the longitudinal direction using a cobalt magnet or a solenoid. In the case of a disk, although sufficient isotropic alignment can sometimes be obtained without using an alignment device, it is preferable to employ a known random alignment device such as, for example, arranging obliquely alternating cobalt magnets or applying an alternating magnetic field with a solenoid. The isotropic alignment referred to here means that, in the case of a ferromagnetic metal powder, in general, in-plane two-dimensional random is preferable, but it can be three-dimensional random by introducing a vertical component. In the case of hexagonal ferrite, in general, it tends to be in-plane and vertical three-dimensional random, but in-plane two-dimensional random is also possible. By using a known method such as magnets having different poles facing each other so as to make vertical alignment, circumferentially isotropic magnetic properties can be introduced. In particular, when carrying out high density recording, vertical alignment is preferable. Furthermore, circumferential alignment may be employed using spin coating.

It is preferable for the drying position for the coating to be controlled by controlling the drying temperature and blowing rate and the coating speed; it is preferable for the coating speed to be 20 to 1,000 m/min and the temperature of drying air to be 60°C or higher, and an appropriate level of pre-drying may be carried out prior to entering a magnet zone.

After drying is carried out, the coated layer is subjected to a surface smoothing treatment. The surface smoothing treatment employs, for example, super calender rolls, etc. By carrying out the surface smoothing treatment, cavities formed by removal of the solvent during drying are eliminated, thereby increasing the packing ratio of the ferromagnetic powder in the magnetic layer, and a magnetic recording medium having high electromagnetic conversion characteristics can thus be obtained. With regard to calendering rolls, rolls of a heat-resistant plastic such as epoxy, polyimide, polyamide, or polyamideimide are used. It is also possible to treat with metal rolls. The magnetic recording medium of the present invention preferably has an extremely smooth surface. As a method therefor, a magnetic layer formed by selecting a specific ferromagnetic powder and binder as described above is subjected to the above-mentioned calendering treatment. With regard to calendering conditions, the calender roll temperature is preferably in the range of 60°C to 100°C, more preferably in the range of 70°C to 100°C, and particularly preferably in the range of 80°C to 100°C, and the pressure is preferably in the range of 100 to 500 kg/cm, more preferably in the range of 200 to 450 kg/cm, and particularly preferably in the range of 300 to 400 kg/cm.

As thermal shrinkage reducing means, there is a method in which a web is thermally treated while handling it with low tension, and a method (thermal treatment) involving thermal treatment of a tape when it is in a layered configuration such as in bulk or installed in a cassette, and either can be used. From the viewpoint of a high output and low noise magnetic recording medium being provided, the thermal treatment method is preferable.

The magnetic recording medium thus obtained can be cut to a desired size using a cutter, etc. before use.

### EXAMPLES

The present invention is explained more specifically by reference to Examples.

'Parts' in the Examples denotes 'parts by weight' unless otherwise specified.

### Example 1-1

### 1. Preparation of smoothing laver coating solution

| | |
|---|---|
| Radiation curing resin | 15 parts |
| 2-(2-Acryloyloxy-1,1-dimethylethyl)-5-ethyl[1,3]dioxane-5-ylmethyl acrylate (R604: manufactured by Nippon Kayaku Co., Ltd.) | |
| Methyl ethyl ketone/cyclohexanone = 8/2 mixed solvent | 100 parts |

This composition was dissolved using a Disper to give a smoothing layer-forming coating solution.

### 2. Preparation of non-magnetic laver coating solution

| | |
|---|---|
| Non-magnetic inorganic powder | 85 parts |
| α-iron oxide, surface treatment agent: Al₂O₃, SiO₂, major axis length: 0.15 µm, acicular ratio: 7, BET specific surface area: 50 m²/g, DBP oil absorption: 33 ml/100g, pH: 8 | |
| Carbon black | 20 parts |
| BET specific surface area: 250 m²/g, DBP oil absorption: 120 ml/100g, pH: 8, volatile content: 1.5% | |
| Polyurethane resin | 12 parts |
| Branched side chain-containing polyester polyolldiphenylmethane diisocyanate type, hydrophilic polar group: -SO₃Na, contained at 70 eq/ton | |
| Acrylic resin | 6 parts |
| Benzyl methacrylate/diacetone acrylamide type, hydrophilic polar group: -SO₃Na, contained at 60 eq/ton | |
| Phenylphosphonic acid | 3 parts |
| α-Al₂O₃ (average particle size 0.2 µm) | 1 part |
| Cyclohexanone | 140 parts |
| Methyl ethyl ketone | 170 parts |
| Butyl stearate | 2 parts, and |
| Stearic acid | 1 part |

### 3. Preparation of magnetic layer coating solution

| | |
|---|---|
| Acicular ferromagnetic metal powder | 100 parts |
| Composition: Fe/Co/Al/Y = 68/20/7/5, surface treatment agent: Al₂O₃, Y₂O₃, crystallite size: 125A, major axis length: 45 nm, acicular ratio: 5, BET specific surface area: 42 m²/g, coercive force (Hc): 180 kA/m, saturation magnetization | |
| (σs): 135 A·m²/kg | |
| Polyurethane resin | 12 parts |
| Branched side chain-containing polyester polyol/diphenylmethane diisocyanate type, hydrophilic polar group: -SO₃Na, contained at 70 eq/ton | |
| Phenylphosphonic acid | 3 parts |
| α-Al₂O₃ (particle size 0.1 µm) | 2 parts |
| Carbon black (particle size 20 nm) | 2 parts |
| Cyclohexanone | 110 parts |
| Methyl ethyl ketone | 100 parts |
| Toluene | 100 parts |
| Butyl stearate | 2 parts, and |
| Stearic acid | 1 part |

The magnetic layer (upper layer) coating composition and the non-magnetic layer (lower layer) coating composition were each kneaded in an open kneader for 60 minutes, and dispersed in a sand mill for 120 minutes. To the dispersions thus obtained were added 6 parts of a trifunctional low molecular weight polyisocyanate compound (Coronate 3041, manufactured by Nippon Polyurethane Industry Co., Ltd.), and the mixtures were stirred for a further 20 minutes, and then filtered using a filter having an average pore size of 1 µm to give a magnetic layer coating solution and a non-magnetic layer coating solution.

On the surface of a polyethylene naphthalate (PEN) film support, above which the magnetic layer was to be formed, the film support having a thickness of 5 µm, a surface roughness of 3 nm for the surface above which the magnetic layer was to be formed and 8 nm for the surface of the back side, a degree of crystallinity of 35%, and a rigid amorphous content of 6%, an Al₂O₃ reinforcing layer was formed by vapor deposition at a thickness of 40 nm using a vacuum vapor deposition system at a maximum incident angle of 60°, a film transport speed of 1.5 m/min, and an electron gun power of 16 kW, while controlling the film temperature to be 210°C. The obtained non-magnetic support with the reinforcing layer had a degree of crystallinity of 40% and a rigid amorphous content of 30%.

The smoothing layer coating solution was further applied so as to give a dry thickness of 0.5 µm, dried, and then irradiated with an electron beam at an acceleration voltage of 150 kV so as to give an absorbed dose of 5 Mrad; subsequently the non-magnetic layer coating solution was applied so as to give a dry thickness of 1.8 µm, and immediately after that, the magnetic layer coating solution was applied so as to give a dry thickness of 0.1 µm, thus carrying out simultaneous multiple layer coating. During this process, the two layers were subjected to magnetic field alignment using a 300 mT magnet while they were in a wet state, they were dried, then subjected to a calender treatment using a 7 stage calender with metal rolls alone at a temperature of 90°C, a speed of 100 m/min, and a line pressure of 300 kg/cm, and a thermal treatment at 70°C for 48 hours, and slit to a width of 1/2 inch to give a magnetic tape.

### Example 1-2, Reference Example 1-3

Magnetic tapes were prepared in the same way as in Example 1-1 except that the type of non-magnetic support, the presence or absence of the smoothing layer, and the reinforcing layer-arranging surface were changed as shown in Table 1.

### Comparative Examples 1-1 to 1-4

Magnetic tapes were prepared in the same way as in Example 1-1 except that the type of the non-magnetic support, the presence or absence of the reinforcing layer, the presence or absence of the smoothing layer, and the thickness thereof were changed as shown in Table 1.

### Examples 2-1 to 2-2, Reference Example 2-3

### Preparation of magnetic layer coating solution

| | |
|---|---|
| Tabular ferromagnetic hexagonal ferrite powder | 100 parts |
| Composition (molar ratio): Ba/Fe/Co/Zn = 1/9/0.2/0.8, plate size: 25 nm, plate ratio: 3, BET specific surface area: 50 m²/g, coercive force (Hc): 191 kA/m, saturation magnetization (σs): 60 A·m²/kg | |
| Polyurethane resin | 12 parts |
| Branched side chain-containing polyester polyol/diphenylmethane diisocyanate type, hydrophilic polar group: -SO₃Na, contained at 70 eq/ton | |
| Phenylphosphonic acid | 3 parts |
| α-Al₂O₃ (particle size 0.15 µm) | 2 parts |
| Carbon black (particle size 20 nm) | 2 parts |
| Cyclohexanone | 110 parts |
| Methyl ethyl ketone | 100 parts |
| Toluene | 100 parts |
| Butyl stearate | 2 parts, and |
| Stearic acid | 1 part |

Magnetic tapes were prepared in the same way as in Example 1-1 except that the type of non-magnetic support, the presence or absence of the smoothing layer, and the reinforcing layer-arranging surface were changed as shown in Table 2.

### Comparative Examples 2-1 to 2-4

Magnetic tapes were prepared in the same way as in Example 2-1 except that the type of the non-magnetic support, the presence or absence of the reinforcing layer, the presence or absence of the smoothing layer, and the thickness thereof were changed as shown in Table 2.

### Examples 3-1

### Preparation of magnetic layer coating solution

| | |
|---|---|
| Tabular ferromagnetic hexagonal ferrite powder | 100 parts |
| Composition (molar ratio): Ba/Fe/Co/Zn = 1/9/0.2/0.8, plate size: 25 nm, plate ratio: 3, BET specific surface area: 50 m²/g, coercive force (Hc): 191 kA/m, saturation magnetization (σs): 60 A·m²/kg | |
| Polyurethane resin | 12 parts |
| Branched side chain-containing polyester polyol/diphenylmethane diisocyanate type, hydrophilic polar group: -SO₃Na, contained at 70 eq/ton | |
| Phenylphosphonic acid | 3 parts |
| α-Al₂O₃ (particle size 0.15 µm) . | 2 parts |
| Carbon black (particle size 20 nm) | 2 parts |
| Cyclohexanone | 110 parts |
| Methyl ethyl ketone | 100 parts |
| Toluene | 100 parts |
| Butyl stearate | 2 parts, and |
| Stearic acid | 1 part |

A magnetic coating solution was prepared in the same way as in Example 1-1 using the components of this upper layer magnetic coating solution.

On the surface of a polyethylene naphthalate (PEN) film support, above which the magnetic layer was to be formed, the film support having a thickness of 30 µm, a surface roughness of 2 nm for the surface above which the magnetic layer was to be formed, a degree of crystallinity of 35%, and a rigid amorphous content of 6%, an Al₂O₃ reinforcing layer was formed by vapor deposition at a thickness of 40 nm using a vacuum vapor deposition system at a maximum incident angle of 60°, a film transport speed of 1.5 m/min, and an electron gun power of 16 kW, while controlling the film temperature to be 210°C. The obtained non-magnetic support with the reinforcing layer had a degree of crystallinity of 40% and a rigid amorphous content of 30%.

The above-mentioned smoothing layer coating solution was applied on the obtained polyethylene naphthalate (PEN) support so as to give a dry thickness of 0.5 µm, dried, and then irradiated with an electron beam at an acceleration voltage of 160 kV so as to give an absorbed dose of 5 Mrad. Moreover, the same non-magnetic coating solution as that of Example 1 was applied so as to give a dry thickness of 1.8 µm, and immediately after that, the above-mentioned magnetic layer coating solution was applied so as to give a dry thickness of 0.2 µm, thus carrying out simultaneous multiple layer coating, the two layers were subjected to random alignment by passing through an alternating magnetic field generator between two magnetic field strengths, that is, at a frequency of 50 Hz and a magnetic field strength of 25 mT and a frequency of 50 Hz and a magnetic field strength of 12 mT while they were still in a wet state, they were dried, then subjected to a calender treatment using a 7 stage calender at a temperature of 90°C and a line pressure of 300 kg/cm, and a thermal treatment at 70°C for 48 hours, stamped into 1.8 inches, subjected to surface grinding, then placed in a Clik-disk cartridge provided with an inside liner, and equipped with predetermined mechanical parts to give a flexible disk.

### Example 3-2, Reference Example 3-3

Magnetic disks were prepared in the same way as in Example 3-1 except that the type of the non-magnetic support, the presence or absence of the smoothing layer, and the reinforcing layer-arranging surface were changed as shown in Table 3.

### Comparative Examples 3-1 to 3-4

Magnetic disks were prepared in the same way as in Example 3-1 except that the type of the non-magnetic support, the presence or absence of the reinforcing layer, the presence or absence of the smoothing layer, and the thickness thereof were changed as shown in Table 3.

### Measurement method

### 1. Measurement of degree of crystallinity (%) and rigid amorphous content (%)

A differential scanning calorimetric analyzer DSC Q1000 manufactured by TA Instruments was used. The amorphous percentage (%) was obtained in % by dividing the whole variation of specific heat at a glass transition temperature obtained under measurement conditions of a temperature increase rate of 2 °C/min, a temperature modulation frequency of 60 seconds, and a temperature modulation amplitude of 0.32°C by 77.8 J/(mol °C), which is a value for a 100% amorphous PET, and then multiplying the result by 100. The degree of crystallinity (%) was given in % by obtaining a crystalline melting peak area by increasing temperature at 20 °C/min without temperature modulation, while defining a value of PET of 100% degree of crystallinity as 26.9 kJ/mol. The rigid amorphous content (%) is a value obtained by subtracting the amorphous percentage (%) and the degree of crystallinity (%) from 100%.

### 2. Measurement of surface roughness (Ra)

Measured using an optical interference type surface roughness meter (an HD-2000 digital optical profiler manufactured by Wyko Corporation) for a cutoff value of 0.25 mm, and an arithmetic mean roughness was determined, which corresponded to Ra in accordance with JIS B0660-1998 and ISO 4287-1997.

### 3. Measurement of error rate (initial, under high temperature and high humidity)

A recording signal was recorded at 23°C and 50%RH by an 8-10 conversion PR1 equalization method for a magnetic tape and by a (2,7) RLL encoding method for a flexible disk, and measured under an environment of 23°C and 50%RH and an environment of 40°C and 80%RH.

**(Table 1) Tapes (1)**

| | Non-magnetic support | | | | Reinforcing layer | | | Smoothing layer | | | Magnetic | substance | Error rate | |
|---|---|---|---|---|---|---|---|---|---|---|---|---|---|---|
| No. | Material | Thickness | Degree of crystallinity | Rigid amorphous content | Surface to which imparted | Material | Thickness | Type | Thickness | Surface roughness Ra | Type | major axis length | Initial | 40°C 80%RH |
| | | µm | % | % | | | nm | | µm | nm | | nm | x 10⁻⁵ | x 10⁻⁵ |
| Ex. 1-1 | PEN | 5.0 | 40 | 30 | Side on which magnetic layer formed | Al₂O₃ | 40 | R604 | 0.5 | 2.0 | Fe alloy | 45 | 0.11 | 0.20 |
| Ex. 1-2 | PEN | 5.0 | 40 | 30 | Both sides | Al₂O₃ | 40 | R604 | 0.5 | 2.0 | Fe alloy | 45 | 0.09 | 0.22 |
| Ex. 1-3* | PEN | 5.0 | 40 | 30 | Both sides | Al₂O₃ | 40 | None | | 3.0 | Fe alloy | 45 | 0.26 | 0.30 |
| Ex. 1-4 | PET | 5.0 | 50 | 35 | Side on which magnetic layer formed | Al₂O₃ | 40 | R604 | 0.5 | 2.0 | Fe alloy | 45 | 0.13 | 0.30 |
| Comp. Ex. 1-1 | PEN | 5.0 | 35 | 6 | None | - | - | None | - | 3.0 | Fe alloy | 45 | 1.23 | 9.87 |
| Comp. Ex. 1-2 | PET | 5.0 | 42 | 8 | None | - | - | None | - | 3.0 | Fe alloy | 45 | 1.56 | 15.68 |
| Comp. Ex. 1-3 | PEN | 5.0 | 35 | 6 | Both sides | Al₂O₃ | 40 | None | - | 3.0 | Fe alloy | 45 | 1.48 | 2.56 |
| Comp. Ex. 1-4 | PEN | 5.0 | 35 | 6 | Side on which magnetic layer formed | Al₂O₃ | 40 | R604 | 0.5 | 2.0 | Fe alloy | 45 | 0.86 | 5.58 |

| | | | | | | | | | | | | | | |
|---|---|---|---|---|---|---|---|---|---|---|---|---|---|---|
| * Reference Example | | | | | | | | | | | | | | |

**(Table 2) Tapes (2)**

| | Non-magnetic support | | | | Reinforcing layer | | | Smoothing layer | | | Magnetic substance | | Error rate | |
|---|---|---|---|---|---|---|---|---|---|---|---|---|---|---|
| No. | Material | Thickness | Degree of crystallinity | Rigid amorphous content | Surface to which Imparted | Material | Thickness | Type | Thickness | Surface roughness Ra | Type | plate size | Initial | 40°C 80%RH |
| | | µm | % | % | | | nm | | µm | nm | | nm | x 10⁻⁵ | x 10⁻⁵ |
| Ex. 2-1 | PEN | 5.0 | 40 | 30 | Side on which magnetic layer formed | Al₂O₃ | 40 | R604 | 0.5 | 2.0 | Ba ferrite | 25 | 0.07 | 0.16 |
| Ex. 2-2 | PEN | 5.0 | 40 | 30 | Both sides | Al₂O₃ | 40 | R604 | 0.5 | 2.0 | Ba ferrite | 25 | 0.08 | 0.15 |
| Ex. 2-3* | PEN | 5.0 | 40 | 30 | Both sides | Al₂O₃ | 40 | None | - | 3.0 | Ba ferrite | 25 | 0.15 | 0.26 |
| Ex. 2-4 | PET | 5.0 | 50 | 35 | Side on which magnetic layer formed | Al₂O₃ | 40 | R604 | 0.5 | 2.0 | Ba ferrite | 25 | 0.10 | 0.19 |
| Comp. Ex. 2-1 | PEN | 5.0 | 35 | 6 | None | - | - | None | - | 3.0 | Ba ferrite | 25 | 2.57 | 8.95 |
| Comp. Ex. 2-2 | PET | 5.0 | 42 | 8 | None | - | - | None | - | 3.0 | Ba ferrite | 25 | 2.93 | 18.66 |
| Comp. Ex. 2-3 | PEN | 5.0 | 35 | 6 | Both sides | Al₂O₃ | 40 | None | - | 3.0 | Ba ferrite | 25 | 2.35 | 5.47 |
| Comp. Ex. 2-4 | PEN | 5.0 | 35 | 6 | Side on which magnetic layer formed | Al₂O₃ | 40 | R604 | 0.5 | 2.0 | Ba ferrite | 25 | 0.13 | 6.89 |

| | | | | | | | | | | | | | | |
|---|---|---|---|---|---|---|---|---|---|---|---|---|---|---|
| * Reference Example | | | | | | | | | | | | | | |

**(Table 3) Disks**

| | Non-magnetic support | | | | Reinforcing layer | | | Smoothing layer | | | Magnetic | substance | Error rate | |
|---|---|---|---|---|---|---|---|---|---|---|---|---|---|---|
| No. | Material | Thickness | Degree of crystallinity | Rigid amorphous content | Surface to which imparted | Material | Thickness | Type | Thickness | Surface roughness Ra | Type | plate size | Initial | 40°C 80%RH |
| | | µm | % | % | | | nm | | µm | nm | | nm | x 10⁻⁵ | x 10⁻⁵ |
| Ex. 3-1 | PEN | 30 | 40 | 30 | Both sides | Al₂O₃ | 40 | R604 | 0.5 | 2.0 | Ba ferrite | 25 | 0.06 | 0.25 |
| Ex. 3-2 | PEN | 30 | 40 | 30 | Both sides | Al₂O₃ | 40 | R604 | 0.5 | 2.0 | Ba ferrite | 25 | 0.08 | 0.26 |
| Ex. 3-3* | PEN | 30 | 40 | 30 | Both sides | Al₂O₃ | 40 | None | - | 3.0 | Ba ferrite | 25 | 0.17 | 0.24 |
| Ex. 3-4 | PET | 30 | 50 | 35 | Both sides | Al₂O₃ | 40 | R604 | 0.5 | 2.0 | Ba ferrite | 25 | 0.09 | 0.15 |
| Comp. Ex. 3-1 | PEN | 30 | 35 | 6 | None | - | - | None | - | 3.0 | Ba ferrite | 25 | 1.16 | 6.53 |
| Comp. Ex. 3-2 | PET | 30 | 42 | 8 | None | - | - | None | - | 3.0 | Ba ferrite | 25 | 1.53 | 10.39 |
| Comp. Ex. 3-3 | PEN | 30 | 35 | 6 | Both sides | Al₂O₃ | 40 | None | - | 3.0 | Ba ferrite | 25 | 1.72 | 3.99 |
| Comp. Ex. 3-4 | PEN | 30 | 35 | 6 | Both sides | Al₂O₃ | 40 | R604 | 0.5 | 2.0 | Ba ferrite | 25 | 0.97 | 5.66 |

| | | | | | | | | | | | | | | |
|---|---|---|---|---|---|---|---|---|---|---|---|---|---|---|
| * Reference Example | | | | | | | | | | | | | | |

## Claims

1. A magnetic recording medium comprising, in order;
a non-magnetic support having a degree of crystallinity of from 40% to 60% and a rigid amorphous content of from 20% to 60%,
at least a reinforcing layer comprising Al₂O₃
a smoothing layer,
a non-magnetic layer comprising a non-magnetic powder and a binder, and
a magnetic layer comprising a ferromagnetic powder and a binder.

2. The magnetic recording medium according to Claim 1, wherein the thickness of the smoothing layer is from 0.3 µm to 3 µm.

3. The magnetic recording medium according to either Claim 1 or Claim 2, wherein the thickness of the reinforcing layer is from 20 nm to 500 nm.

4. The magnetic recording medium according to any one of Claim 1 to Claim 3, wherein the dry thickness of the non-magnetic layer is from 0.05 µm to 2.5 µm.

5. The magnetic recording medium according to any one of Claim 1 to Claim 4, wherein the dry thickness of the magnetic layer is from 10 nm to 100 nm.

6. The magnetic recording medium according to any one of Claim 1 to Claim 5, wherein the non-magnetic support is made of polyethylene terephthalate (PET) or polyethylene naphthalate (PEN).

7. The magnetic recording medium according to any one of Claim 1 to Claim 6, wherein the degree of crystallinity of the non-magnetic support is from 40% to 55%.

8. The magnetic recording medium according to any one of Claim 1 to Claim 7, wherein the rigid amorphous content of the non-magnetic support is from 25% to 50%.

## Patentansprüche

1. Magnetisches Aufzeichnungsmedium, umfassend in dieser Reihenfolge:
einen nicht-magnetischen Träger mit einem Kristallinitätsgrad von 40 % bis 60 % und einem Gehalt von festen Amorphen von 20 % bis 60 %;
zumindest eine verstärkende Schicht, die Al2O3 umfasst,
eine glättende Schicht,
eine nicht-magnetische Schicht, die ein nichtmagnetisches Pulver und ein Bindemittel umfasst und
eine magnetische Schicht, die ein ferromagnetisches Pulver und ein Bindemittel umfasst.

2. Magnetisches Aufzeichnungsmedium gemäß Anspruch 1, worin die Dicke der glättenden Schicht 0,3 µm bis 3 µm beträgt.

3. Magnetisches Aufzeichnungsmedium gemäß entweder Anspruch 1 oder Anspruch 2, worin die Dicke der verstärkenden Schicht 20 nm bis 500 nm beträgt.

4. Magnetisches Aufzeichnungsmedium gemäß irgendeinem der Ansprüche 1 bis 3, worin die Trockendicke der nicht-magnetischen Schicht 0,05 µm bis 2,5 µm beträgt.

5. Magnetisches Aufzeichnungsmedium gemäß irgendeinem der Ansprüche 1 bis 4, worin die Trockendicke der magnetischen Schicht 10 nm bis 100 nm beträgt.

6. Magnetisches Aufzeichnungsmedium gemäß irgendeinem der Ansprüche 1 bis 5, worin der nicht-magnetische Träger aus Polyethylentherephthalat (PET) oder Polyethylennaphthalat (PEN) hergestellt ist.

7. Magnetisches Aufzeichnungsmedium gemäß irgendeinem der Ansprüche 1 bis 6, worin der Kristallinitätsgrad des nicht-magnetischen Trägers 40 % bis 55 % beträgt.

8. Magnetisches Aufzeichnungsmedium gemäß irgendeinem der Ansprüche 1 bis 7, worin der Gehalt von festen Amorphen des nicht-magnetischen Trägers 25 % bis 50 % beträgt.

## Revendications

1. Support d'enregistrement magnétique comprenant, dans l'ordre :
un support non magnétique ayant un degré de cristallinité de 40 % à 60 % et un contenu amorphe rigide de 20 % à 60 %,
au moins une couche de renforcement comprenant de l'Al₂O₃,
une couche de lissage,
une couche non magnétique comprenant une poudre non magnétique et un liant, et
une couche magnétique comprenant une poudre ferromagnétique et un liant.

2. Support d'enregistrement magnétique selon la revendication 1, dans lequel l'épaisseur de la couche de lissage est de 0,3 µm à 3 µm.

3. Support d'enregistrement magnétique selon l'une ou l'autre de la revendication 1 ou de la revendication 2, dans lequel l'épaisseur de la couche de renforcement est de 20 nm à 500 nm.

4. Support d'enregistrement magnétique selon l'une quelconque de la revendication 1 à la revendication 3, dans lequel l'épaisseur sèche de la couche non magnétique est de 0,05 µm à 2,5 µm.

5. Support d'enregistrement magnétique selon l'une quelconque de la revendication 1 à la revendication 4, dans lequel l'épaisseur sèche de la couche magnétique est de 10 nm à 100 nm.

6. Support d'enregistrement magnétique selon l'une quelconque de la revendication 1 à la revendication 5, dans lequel le support non magnétique est constitué de polyéthylène téréphtalate (PET) ou de polyéthylène naphthalate (PEN).

7. Support d'enregistrement magnétique selon l'une quelconque de la revendication 1 à la revendication 6, dans lequel le degré de cristallinité du support non magnétique est de 40 % à 55 %.

8. Support d'enregistrement magnétique selon l'une quelconque de la revendication 1 à la revendication 7, dans lequel le contenu amorphe rigide du support non magnétique est de 25 % à 50 %.
